(19) Europäisches Patentamt
European Patent Office
Office européen des brevets

(11) **EP 4 625 978 A1**

(12) **EUROPEAN PATENT APPLICATION**

(43) Date of publication:
**01.10.2025 Bulletin 2025/40**

(21) Application number: **24305494.7**

(22) Date of filing: **29.03.2024**

(51) International Patent Classification (IPC):
*H04N 19/105* (2014.01)     *H04N 19/11* (2014.01)
*H04N 19/176* (2014.01)     *H04N 19/593* (2014.01)

(52) Cooperative Patent Classification (CPC):
**H04N 19/593; H04N 19/105; H04N 19/11;
H04N 19/176**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **RATH, Gagan Bihari
  35000 RENNES (FR)**
• **BORDES, Philippe
  35890 LAILLE (FR)**
• **CHEN, Ya
  35700 RENNES (FR)**
• **DE LAGRANGE, Philippe
  35830 BETTON (FR)**

(74) Representative: **Interdigital
Immeuble ZEN 2
845 A, avenue des Champs Blancs
35510 Cesson-Sévigné (FR)**

(54) **PERSPECTIVE INTRA PREDICTION SIGNALING WITH DECODER SIDE INTRA MODE DERIVATION AND TEMPLATE BASED INTRA MODE DERIVATION**

(57)     A method for decoding comprising:
applying (1307) a backward intra prediction process until obtaining at least one angular mode for a target block, at least one perspective point in a neighborhood of the target block being determined from the at least one angular mode;

applying (1307) a perspective intra prediction (PIP) from samples in the neighborhood of the target block to generate a PIP predictor using at least one of the determined at least one perspective point;
predicting (1307) the target block using the PIP predictor.

Fig. 13

**Description**

1. TECHNICAL FIELD

At least one of the present embodiments generally relates to a method and a device for applying intra prediction in a picture.

2. BACKGROUND

To achieve high compression efficiency, video coding schemes usually employ predictions and transforms to leverage spatial and temporal redundancies in a video content. During an encoding, pictures of the video content are divided into blocks of samples (i.e., pixels), these blocks being then partitioned into one or more sub-blocks, called original sub-blocks in the following. An intra or inter prediction is then applied to each sub-block to exploit intra or inter image correlations. Whatever the prediction method used (intra or inter), a predictor sub-block is determined for each original sub-block. Then, a sub-block representing a difference between the original sub-block and the predictor sub-block, often denoted as a prediction error sub-block, or a prediction residual sub-block, or simply a residual sub-block, is transformed, quantized, and entropy coded to generate an encoded video stream. To reconstruct the video, the compressed data is decoded by inverse processes corresponding to the transform, quantization, and entropic coding.

Many coding tools for intra prediction were proposed in the past. Many of these intra prediction modes are forward prediction tools, that is, the intra prediction methods used at the encoder is explicitly signalled to the decoder. More recently, tools employing backward estimation (that is, the prediction modes are estimated using already decoded reconstructed samples in a picture) were proposed. Decoder Side Intra mode Derivation (DIMD) and Template based Intra Mode Derivation employ backward estimation methods to estimate multiple prediction modes for a block. The encoder uses a minimum amount of signalling to indicate which modes are employed and, if necessary, to perform a blending of the multiple predictions corresponding to the multiple prediction modes. Another method based on multiple prediction modes for a block is through a use of a perspective intra prediction mode. In current implementations, the perspective intra prediction mode may require a signaling of a perspective point from which is derived the prediction.

It is desirable to propose solutions allowing to overcome the above issue. In particular, it is desirable to propose methods allowing reducing the overhead required for signaling the perspective intra prediction mode.

3. BRIEF SUMMARY

In a first aspect, one or more of the present embodiments provide a method for encoding comprising:

applying a backward intra prediction process until obtaining at least one angular mode for a target block, at least one perspective point in a neighborhood of the target block being determined from the at least one angular mode;
applying a perspective intra prediction (PIP) from reconstructed samples in the neighborhood of the target block to generate a PIP predictor using at least one of the determined at least one perspective point;
predicting the target block using the PIP predictor.

In a second aspect, one or more of the present embodiments provide a method for decoding comprising:

applying a backward intra prediction process until obtaining at least one angular mode for a target block, at least one perspective point in a neighborhood of the target block being determined from the at least one angular mode;
applying a perspective intra prediction (PIP) from samples in the neighborhood of the target block to generate a PIP predictor using at least one of the determined at least one perspective point;
predicting the target block using the PIP predictor.

In an embodiment of the first or the second aspect, the backward intra prediction process is Decoder Side Intra mode Derivation (DIMD).

In an embodiment of the first or the second aspect, the method comprises signaling in video data or decoding from video data information indicating that DIMD is enabled for the target block and an information indicating that the PIP predictor applies for predicting the target block.

In an embodiment of the first or the second aspect, the backward intra prediction process is Template based Intra Mode Derivation (TIMD).

In an embodiment of the first or the second aspect, the method comprises signaling in video data or decoding from video data information indicating that TIMD is enabled for the target block and an information indicating that the PIP predictor applies for predicting the target block.

In an embodiment of the first or the second aspect, the neighborhood of the target block is divided into a plurality of reference arrays, and the method comprises signaling an information representing one reference array of the plurality of reference arrays to be used for applying the perspective intra prediction.

In an embodiment of the first or the second aspect, at least one value of the information representing one reference array of the plurality of reference arrays indicates that the PIP predictor applies for predicting the target block.

In an embodiment of the first or the second aspect, the method comprises, responsive to a plurality of perspective points was generated, generating at least one additional PIP predictor, each additional PIP predictor being generated from a perspective point of the plurality, and identifying a final PIP predictor providing the best rate distortion performance among the PIP predictors, the target block being predicted from the final PIP predictor.

In an embodiment of the first or the second aspect, the method comprises signaling an information or decoding an information representing the final PIP predictor.

In an embodiment of the first or the second aspect, the information representing one reference array of the plurality of reference arrays allows deriving an information representing the final PIP predictor.

In a third aspect, one or more of the present embodiments provide a device for encoding comprising electronic circuitry configured for:

applying a backward intra prediction process until obtaining at least one angular mode for a target block, at least one perspective point in a neighborhood of the target block being determined from the angular mode;
applying a perspective intra prediction (PIP) from samples in the neighborhood of the target block to generate a PIP predictor using at least one of the determined perspective point;
predicting the target block using the PIP predictor.

In a fourth aspect, one or more of the present embodiments provide a device for decoding comprising electronic circuitry configured for:

applying a backward intra prediction process until obtaining at least one angular mode for a target block, at least one perspective point in a neighborhood of the target block being determined from the angular mode;
applying a perspective intra prediction (PIP) from samples in the neighborhood of the target block to generate a PIP predictor using at least one of the determined perspective point;
predicting the target block using the PIP predictor.

In a fifth aspect, one or more of the present embodiments provide a signal representing video data comprising an information indicating that Decoder Side Intra mode Derivation (DIMD) or Template based Intra mode Derivation (TIMD) is enabled for a target block for determining at least one angular mode, at least one perspective point in a neighborhood of the target block being determined from the at least one angular mode, and an information indicating that a perspective intra prediction (PIP) from samples in the neighborhood of the target block using at least one of the determined at least one perspective point applies for determining a predictor to be used for predicting the target block.

In a sixth aspect, one or more of the present embodiments provide a non-transitory information storage medium storing program code instructions for implementing the method according to the first or the second aspect.

In a seventh aspect, one or more of the present embodiments provide a computer program comprising program code instructions for implementing the method according to the first or the second aspect.

4. BRIEF SUMMARY OF THE DRAWINGS

Fig. 1 illustrates schematically a context in which embodiments are implemented;
Fig. 2 illustrates schematically an example of partitioning undergone by a picture of pixels of an original video;
Fig. 3 depicts schematically a method for encoding a video stream;
Fig. 4 depicts schematically a method for decoding an encoded video stream;
Fig. 5A illustrates schematically an example of hardware architecture of a processing module able to implement an encoding module or a decoding modulein which various aspects and embodiments are implemented;
Fig. 5B illustrates a block diagram of an example of a first system in which various aspects and embodiments are implemented;
Fig. 5C illustrates a block diagram of an example of a second system in which various aspects and embodiments are implemented;
Figs. 6A and 6B illustrate an application of a perspective intra prediction mode on a block;
Fig. 7 illustrates a derivation of an angle parameter for a target pixel at a given pixel position in the perspective intra prediction mode;

Fig. 8 illustrates a generation of an Histogram of Gradient for the DIMD mode;

Fig. 9 represents a process to derive a DIMD predictor;

Fig. 10 illustrates a variant of the DIMD mode;

Fig. 11 illustrates the TIMD mode;

Fig. 12 illustrates schematically an encoding process according to a first embodiment;

Fig. 13 illustrates schematically an decoding process according to the first embodiment;

Fig. 14 illustrates schematically an encoding process according to a second embodiment;

Fig. 15 illustrates schematically an decoding process according to the second embodiment;

Fig. 16 illustrates the PDPC mode;

Fig. 17 illustrates schematically a process for encoding a target block according to a sixth embodiment;

Fig. 18 illustrates schematically an decoding process according to the sixth embodiment;

Fig. 19 illustrates schematically a process for encoding a target block according to a seventh embodiment; and,

Fig. 20 illustrates schematically a process for decoding a target block according to the seventh embodiment.

## 5. DETAILED DESCRIPTION

The following examples of embodiments are described in the context of a video format similar to ECM as described in document JVET-AF2025: Algorithm description of Enhanced Compression Model 11 (ECM 11) /Joint Video Experts Team (JVET) of ITU-T SG 16 WP 3 and ISO/IEC JTC 1/SC 29, 32nd Meeting, Hannover, DE, 13-20 October 2023 just called *JVET-AF2025* in the following. However, these embodiments are not limited to the video coding/decoding method corresponding to ECM. These embodiments are, in particular, adapted to various video formats comprising (and derived from) for example VVC (Versatile Video Coding (VVC), ITU-T H.266), HEVC (ISO/IEC 23008-2 - MPEG-H Part 2, High Efficiency Video Coding / ITU-T H.265)), AVC ((ISO/CEI 14496-10), EVC (Essential Video Coding/MPEG-5), AV1, AV2 and VP9. In addition, these embodiments are also adapted to various still picture formats such as JPEG.

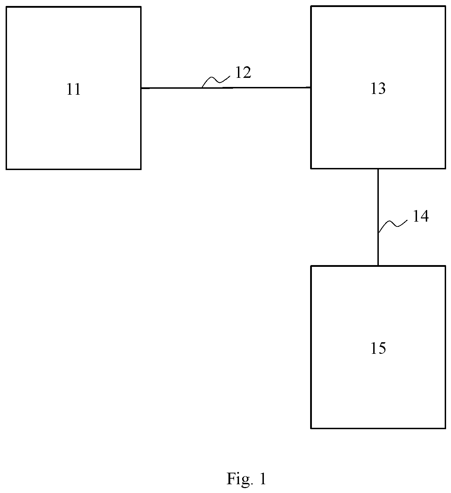

**Fig. 1** illustrates schematically a context in which embodiments are implemented.

In Fig. 1, a system 11, that could be a camera, a storage device, a computer, a server or any device capable of delivering a video stream (i.e., video data), transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or 5G) network link.

The system 13, that could be for example a set top box, receives and decodes the video stream to generate a sequence of decoded pictures. A post processing may be applied to the decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display system 15 are comprised in a TV, a computer, a tablet, a smartphone, a head-mounted display, etc.

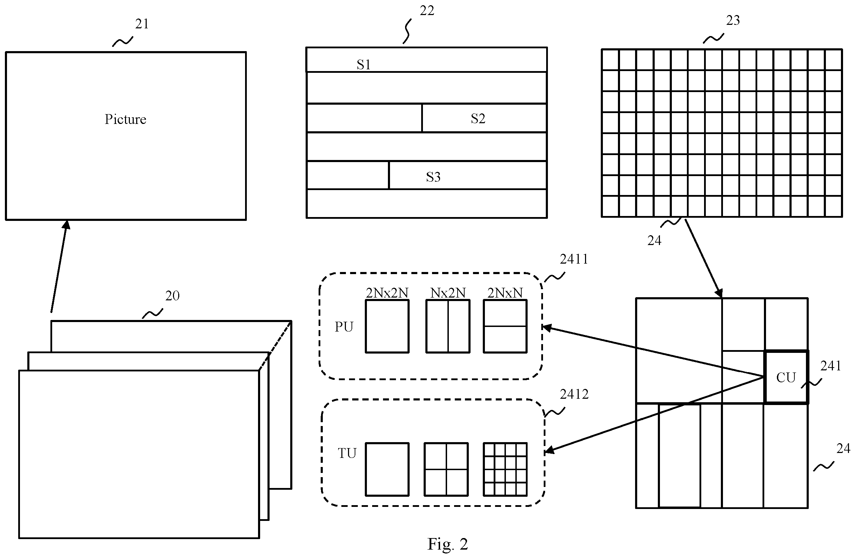

Figs. 2, 3 and 4 introduce an example of video format.

**Fig. 2** illustrates an example of partitioning undergone by a picture of pixels 21 of an original video sequence 20. It is considered here that a pixel is composed of three components: a luminance component and two chrominance components. Other types of pixels are however possible comprising less or more components such as only a luminance component or an additional depth component or transparency component.

A picture is divided into a plurality of coding entities. First, as represented by reference 23 in Fig. 2, a picture is divided in a grid of blocks called *coding tree units* (CTU). A CTU consists of an $N \times N$ block of luminance samples together with two corresponding blocks of chrominance samples. $N$ is generally a power of two having a maximum value of "128" for example. Second, a picture is divided into one or more groups of CTU. For example, it can be divided into one or more tile rows and tile columns, a *tile* being a sequence of CTUs covering a rectangular region of a picture. In some cases, a tile could be divided into one or more *bricks,* each of which consisting of at least one row of CTUs within the tile. Above the concept of tiles and bricks, another encoding entity, called *slice,* exists, that can contain at least one tile of a picture or at least one brick of a tile.

In the example of Fig. 2, as represented by reference 22, the picture 21 is divided into three slices S 1, S2 and S3 of the raster-scan slice mode, each comprising a plurality of tiles (not represented), each tile comprising only one brick.

As represented by reference 24 in Fig. 2, a CTU may be partitioned into the form of a hierarchical tree of one or more sub-blocks called *coding units* (CU). The CTU is the root (*i.e.* the parent node) of the hierarchical tree and can be partitioned in a plurality of CUs (*i.e.* child nodes). Each CU becomes a leaf of the hierarchical tree if it is not further partitioned in smaller CUs, or becomes a parent node of smaller CUs (*i.e.* child nodes) if it is further partitioned.

In the example of Fig. 2, the CTU 24 is first partitioned in "4" square CUs using a quadtree type partitioning. The upper left CU is a leaf of the hierarchical tree since it is not further partitioned, *i.e.,* it is not a parent node of any other CU. The upper right CU is further partitioned in "4" smaller square CUs using again a quadtree type partitioning. The bottom right CU is vertically partitioned in "2" rectangular CUs using a binary tree type partitioning. The bottom left CU is vertically partitioned in "3" rectangular CUs using a ternary tree type partitioning.

During the coding of a picture, the partitioning is adaptive, each CTU being partitioned so as to optimize a compression efficiency of the CTU criterion.

In HEVC the concept of prediction unit (PU) and transform unit (TU) were also introduced. Indeed, in HEVC, the coding entities that are used for prediction (*i.e.,* a PU) and transform (*i.e.* a TU) can be different subdivisions of a CU. For example, as represented in Fig. 2, a CU of size $2N \times 2N$, can be divided in PUs2411 of size $N \times 2N$ or of size $2N \times N$. In addition, said CU can be divided in "4" TUs2412 of size $N \times N$ or in "16" TUs of size $\left(\frac{N}{2}\right) \times \left(\frac{N}{2}\right)$. The TUs are always of square shapes.

One can note that in VVC, except in some particular cases, boundaries of the TU and PU are aligned on those of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

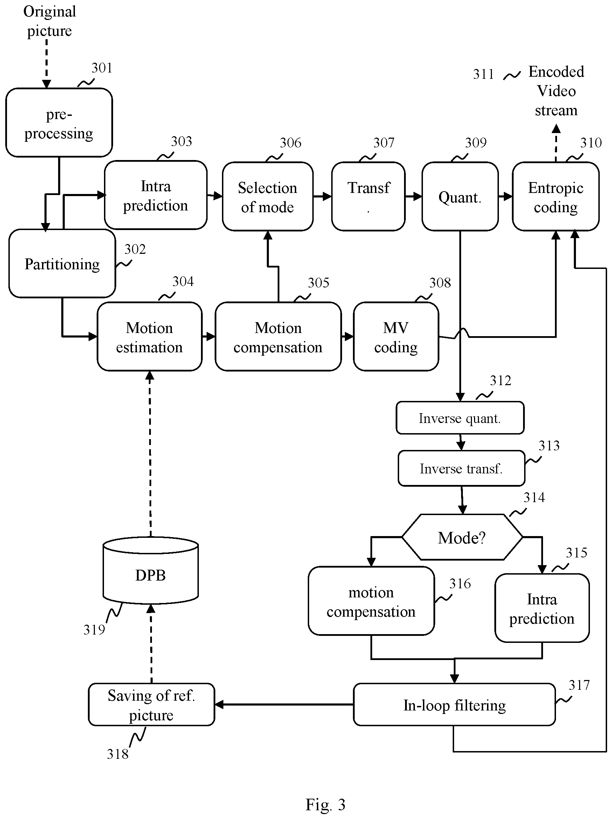

**Fig. 3** depicts schematically a method for encoding a video stream executed by an encoding module. For instance, the method for encoding of Fig. 3 is executed by the system 11. Variations of this method for encoding are contemplated, but the method for encoding of Fig. 3 is described below for purposes of clarity without describing all expected variations.

Before being encoded, a current original picture of an original video sequence may go through a pre-processing. For example, in a step 301, a color transform is applied to the current original picture (e.g., conversion from RGB 4:4:4 to YCbCr 4:2:0), or a remapping is applied to the current original picture components in order to get a signal distribution more resilient to compression (for instance using a histogram equalization of one of the color components). Pictures obtained by pre-processing are called pre-processed pictures in the following.

The encoding of a pre-processed picture begins with a partitioning of the pre-processed picture during a step 302, as described in relation to Fig. 2. The pre-processed picture is thus partitioned into CTU, CU, PU, TU, etc.

For each block, the encoding module determines then a coding mode between an intra prediction mode and an inter prediction mode.

Intra prediction aims at exploiting spatial redundancies in a picture. In a step 303, a current block (i.e. a PU or CU) is spatially predicted from samples of causal (reconstructed) neighbour blocks in the same picture, i.e., the blocks on the top and top-right, the blocks on the left and left-bottom, and the top-left block. The encoder constructs a plurality of predictor blocks for the current block from these samples and chooses the one that leads to the best rate-distortion (RD) performance. In recent video compression methods, up to "67" intra prediction modes leading to "67" predictor blocks are constructed. The plurality of predictor blocks comprises a planar mode (indexed as mode 0), a DC mode (indexed as mode "1") and the remaining "65" are angular modes. The planar and DC modes aim to model slow changing intensity regions whereas the angular modes are designed to model directional structures present in pictures. The best prediction mode is encoded and transmitted to the decoder so that the decoder constructs the same intra predictor block for the current block.

To keep the decoder complexity low, the intra prediction uses generally only one row of reference pixels on top and one column of reference pixels on left of the current block. Though the encoder has the option of choosing among three sets of reference lines in a mode called *multiple reference lines* (MRL), the prediction is always based on one reference line that consists of one row on top and one column on left. Because of this limitation, the amount of information contained in the reference pixels is quite limited and thus the intra prediction efficiency, which is based on the correlation between the current block's samples and the reference samples, is also limited. More recently, a proposal for using up to two adjacent reference lines has been proposed. In this case, the predictor is constructed as a weighted average of the two predictors each based on a single reference line.

Recently, a perspective intra prediction (PIP) mode was introduced. In perspective intra prediction, a target block is predicted using a perspective point. The perspective point is chosen on a straight line passing through the centre of the block that indicates the prediction direction associated with an intra mode.

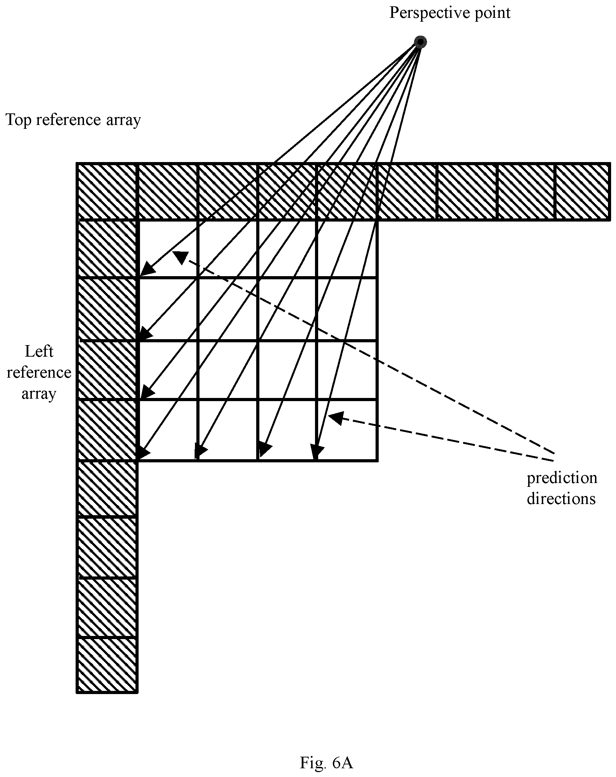

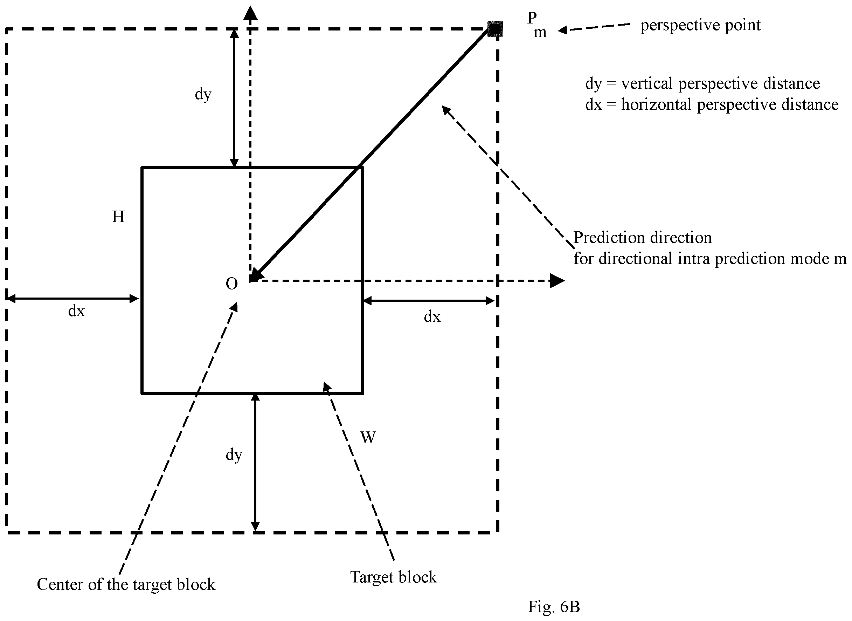

**Figs. 6A** and **6B** illustrate an example of application of the PIP mode on a block. In the PIP mode, a target block is predicted using a perspective point corresponding to a point $P_m$ in Fig. 6B. A perspective point is localized along a prediction direction at a certain offset distance from the target block. For vertical prediction modes, a vertical offset (y-offset) distance can be denoted by *dy,* and for horizontal prediction modes, an horizontal offset (x-offset) distance can be denoted by *dx.* In the following, we call *dx* and *dy* as the horizontal and vertical perspective distances, respectively. In the following, we consider that the horizontal and vertical perspective distances can be derived from the dimensions (height and width) of the target block. For a vertical angular mode (an angular mode is an intra prediction mode that is neither planar nor DC), we call the corresponding perspective prediction *vertical perspective prediction* or *vertical PIP,* and similarly for a horizontal angular mode we call the corresponding perspective prediction *horizontal perspective prediction* or *horizontal PIP.*

The primary difference between a regular angular intra prediction and the PIP mode is that in the PIP mode the prediction direction along a row or a column of the target block is variable. An angle parameter *predIntraAngle* is defined and is a function of a location of a target pixel.

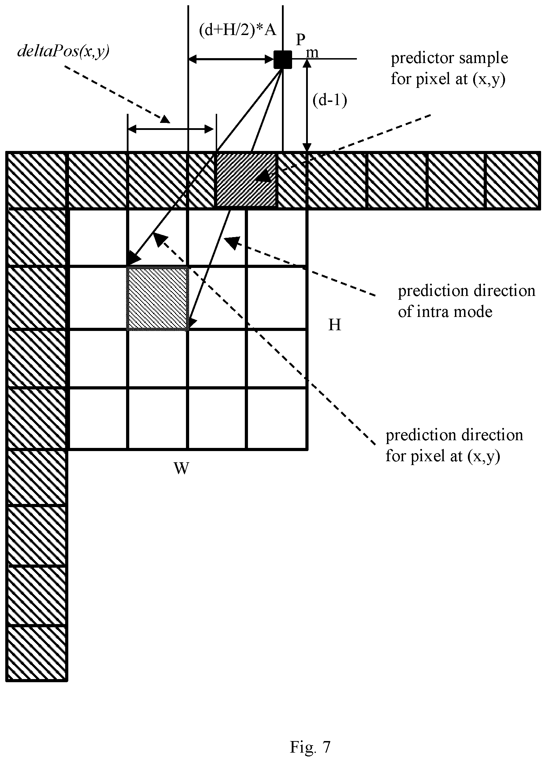

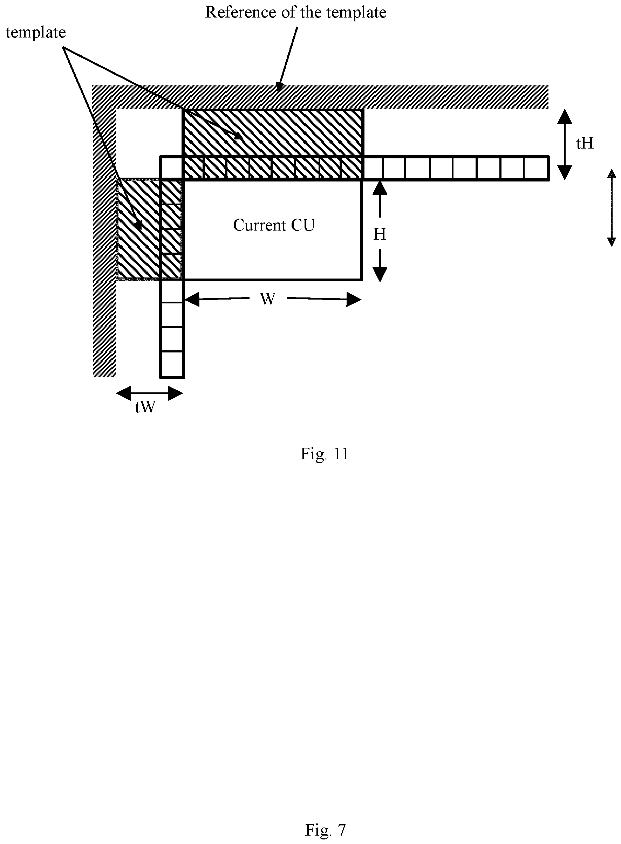

**Fig. 7** illustrates a derivation of the angle parameter *predIntraAngle* for a target pixel at a pixel position (x,y). The textured pixels on the top and the left of the target block are reference samples used for prediction. The predictor for a target pixel is the reference sample lying in the direction joining the target pixel with the perspective point $P_m$. For the sake of illustration, we have chosen a vertical perspective prediction mode with a perspective point $P_m$ above the target block. The case is analogous for a horizontal perspective mode when the perspective point is on the left of the target block as the prediction can be obtained in the same manner by simply swapping the top and left reference arrays of the target block and transposing the obtained prediction at the end. Let *W* and *H* denote a width and height of the target block respectively. Let *d* denote a perspective height, that is, the vertical distance of the perspective point from a top edge of the target block. To avoid division operations, we assume that *d* is a power of "2". In particular, for a vertical perspective mode, we use *d=k×H,* where *k=* $2^n$, n=0,1,...,*Kmax,* where *Kmax* is a preset integer. For a horizontal perspective mode, we use *d=k×W,* where *k=* $2^n$, *n*=0,1,..,*Kmax.* Let *A(x,y)* denote the angle parameter *predIntraAngle* at *(x,y)* and let $A_0$ denote the angle parameter *predIntraAngle* associated with a prediction mode of a parent block of the target block (i.e. the target block results from a partitioning of the parent block).

The angle parameter *predIntraAngle A(x, y)* at target pixel *(x, y)* is computed as

$$A(x,y) = A(x,0) * (d/(d+y))$$

where *A*(*x*, 0), which denotes an angle parameter in the first row but in the same column as the target pixel, is computed as

$$A(x,0) = \left(\left(\left(\frac{W}{2} - x\right) \ll s\right) + \left(d + \frac{H}{2}\right) * A_o\right) / d$$

where *s* is equal to "5" or "6" depending on whether a sample resolution of prediction directions is (1/32) or (1/64) of a pixel, respectively. The angle parameter *predIntraAngle A(x, y)* can also be directly computed as:

$$A(x,y) = \left(\left(\left(\frac{W}{2} - x\right) \ll s\right) + \left(d + \frac{H}{2}\right) * A_o\right) / (d+y)$$

Once the angle parameter *predIntraAngle A(x, y)* has been computed, it remains to identify and interpolate the predictor samples on the reference arrays. For example, identification and interpolation processes defined in ECM are applied. Let *deltaPos(x,y)* denote the x-offset (horizontal offset) of the predictor from the target pixel at (x,y). Let *deltaInt(x,y)* and *deltaFrac(x,y)* denote respectively the integral and fractional parts of x-offset *deltaPos(x,y)* computed as follows:

$$deltaPos(x,y) = (1+y) * A(x,y)$$

$$deltaInt(x,y) = deltaPos(x,y) \gg s$$

$$deltaFrac(x,y) = deltaPos(x,y) \& ((1 \ll s) - 1).$$

Now the predictor sample can be interpolated using six nearest reference samples, three on each side of the predictor sample, as in ECM, which are identified as

$$P0 = refMain[deltaInt(x,y) + x - 1]$$

$$P1 = refMain[deltaInt(x,y) + x]$$

$$P2 = refMain[deltaInt(x,y) + x + 1]$$

$$P3 = refMain[deltaInt(x,y) + x + 2]$$

$$P4 = refMain[deltaInt(x,y) + x + 3]$$

$$P5 = refMain[deltaInt(x,y) + x + 4]$$

where *ref Main* is an array of reference samples pointing to the top-left corner sample. An interpolation filter is determined from the value of *deltaFrac(x, y)*. If *f(n)* denotes the interpolation filter coefficients, the predictor sample is obtained as follows:

*P(x,y) = (f(0) \* P0 + f(1) \* P1 + f(2) \* P2 + f(3) \* P3 + f(4) \* P4 + f(5) \* P5 + 128) >> 8*

In another example, other numbers of reference samples can be used. Alternatively, the predictor sample can be linearly interpolated using only two nearest reference samples such as *P2* and *P3*.

Finally, for some eligible prediction modes, the initial prediction may be followed by Position Dependent intra Prediction Combination (PDPC).

In intra prediction, an aim of PDPC is to smooth out luminance discontinuities close to a reference array that may arise after an initial prediction. These discontinuities may occur in the case of the planar mode, the DC mode, and all angular prediction modes that are associated with prediction directions below and including a purely horizontal prediction mode, and prediction directions to the right of and including a purely vertical prediction mode. PIP is eligible for PDPC if the prediction directions at the left reference array (for vertical PIP) or at the top reference (for horizontal PIP) are nonnegative. This means that, if the perspective point is on top of a block and to the right and including the left reference line (for vertical PIP), or on left of a block and below the and including the top reference line (for horizontal perspective prediction), PDPC can be applied after the initial prediction. This condition can be mathematically expressed as:

$$A_o * (H + 2 * d) > (W \ll s)$$

Or,

$$A_o > \frac{(W \ll 5)}{H + 2*d} = ((W * (1 \ll s))/(1 + \frac{2d}{H}))/H.$$

where $A_o$ is the angle parameter *predIntraAngle,* and s is equal to 5 or 6 depending on if the sample resolution of angular direction is (1/32) or (1/64) of a pixel, respectively. So if the angle parameter *predIntraAngle* satisfies the above condition, PDPC can be applied after the initial PIP mode.

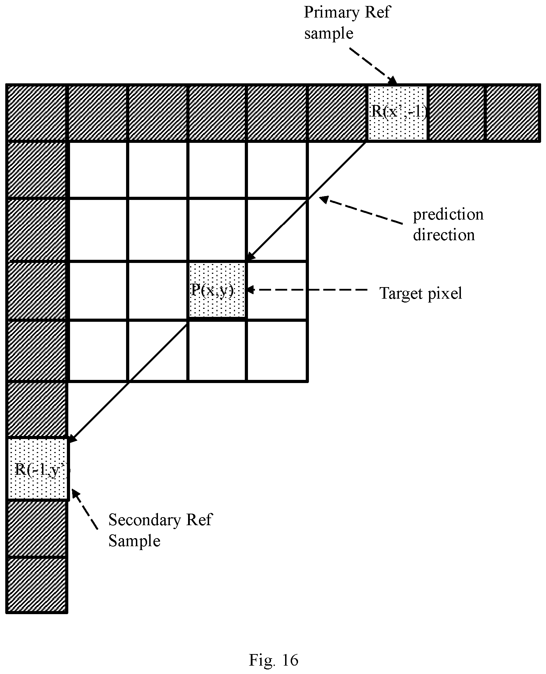

The PDPC applied in the case of vertical PIP is illustrated in Fig. 16. The initial prediction values are modified as follows:

$$P(x,y) = P\_0(x,y) + (wL * (R(-1,y') - P\_0(x,y)) + 32) \gg 6,$$

where

P(x,y) is the final perspective prediction value at pixel (x,y) after applying PDPC,
P_0(x,y) is the initial PIP prediction value at a pixel (x,y), which is equal to the primary reference sample R(x',-1),
R(-1,y') is the secondary reference sample obtained by extending the prediction direction at pixel (x,y),

wL is the weight function computed as

$$wL = 32 >> (2*x >> \text{scale}),$$

where the parameter *scale* is computed such that the secondary reference samples are available for all target pixels in the first (3 << scale) columns of the target block. Here we have used a similar weight function as used in VVC and ECM for easier adaptability of existing PDPC with PIP. In a general case, it can be any other positive decreasing function.

The location of the secondary reference sample R(-1,y') is computed as:

$$y' = 1 + y + (((1 + x)*\text{absInvAngle} + 256) >> 9);$$

where *absInvAngle* = round((512 * 32) / $A_o$(x,y)), for (1/32) sample resolution = round((512 * 64) / $A_o$(x,y)), for (1/64) sample resolution

Similar operation are applied when PDPC is applied in the case of vertical PIP.

For more details on the application of PDPC with the PIP mode, on can refer to document EP23306661.2 incorporated by reference.

As can be seen from the above, in order to allow a decoder to reconstruct a block encoded using the PIP mode, the encoder needs to signal an information representative of the perspective point. When single perspective point is used, the encoder signals an angular mode as in the regular intra prediction mode knowing that the decoder is able to derive the perspective point from the angular mode and from the horizontal and vertical perspective distances *dx* and *dy* (*dx* and *dy* being known by the decoder). Comparing to the regular intra prediction mode, in the case of the PIP mode with a single perspective point, no extra signaling is required. When a plurality of perspective points is possible for each angular mode, an additional signaling of a perspective point selected in the plurality of perspective points is required.

The above intra prediction modes are forward prediction tools, that is, the intra prediction methods used at the encoder is explicitly signalled to the decoder. Many tools employing backward estimation (that is, the prediction modes are estimated using already decoded causal samples in a picture) were recently proposed. Decoder Side Intra mode Derivation (DIMD), Template based Intra Mode Derivation and Fusion (TIMD) and Spatial Geometric Partition Mode (SGPM) all employ backward estimation methods to estimate multiple prediction modes for a block. The encoder uses the minimum amount of signalling to indicate which modes are employed and, if necessary, to perform a blending of the multiple predictions corresponding to the multiple prediction modes. The underlying assumption behind these methods is that not all parts of a block have the same directionality and therefore using multiple predictions and then blending those predictions can result in better predictions. Estimating these modes in the backward fashion eliminates the need of transmitting multiple prediction modes that can entail significant overhead. The assumption seems to be reasonable for large blocks as the natural imagery can contain varying directionality of object structures.

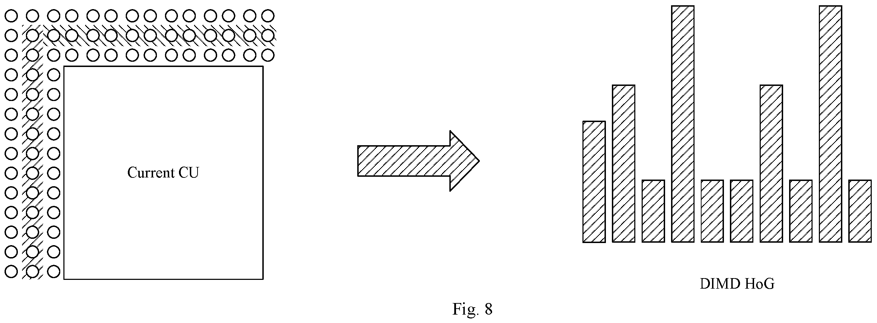

Decoder side Intra Mode Derivation (DIMD) is a new tool to derive an intra prediction mode for coding a current block. DIMD relies on an assumption that reconstructed samples surrounding the current block to be predicted carries information to infer a texture directionality in this current block. When DIMD is applied, up to five angular modes among the "65" angular modes currently considered in intra prediction, that are likely the best angular modes for predicting the current block, are derived from a Histogram of Oriented Gradients (HoG) computed from the neighbouring samples of the current block. The HoG is computed on a three-samples wide/high L-shaped template formed of already reconstructed samples as represented in **Fig. 8.** The predictions with these up to five angular modes are combined (blended) with a planar mode predictor with weights derived from the HoG.

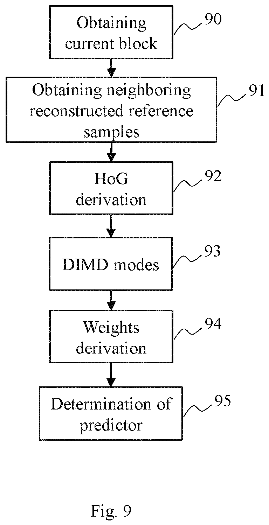

**Fig. 9** represents a process to derive a DIMD predictor.

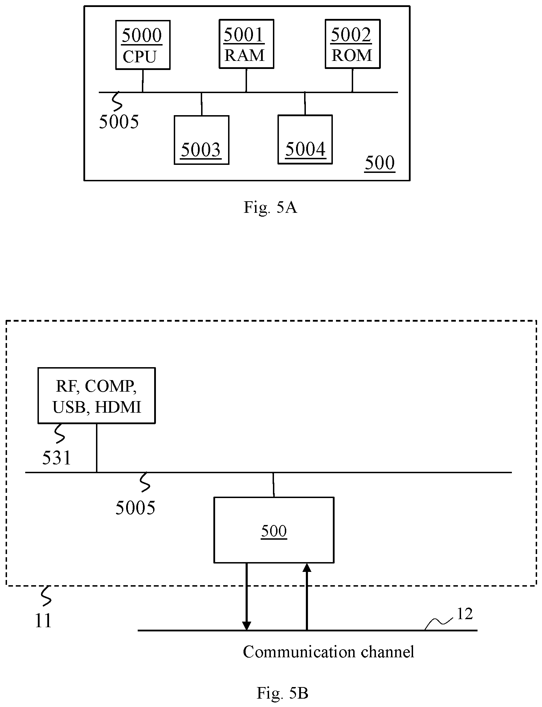

The process of Fig. 9 is applied by a processing module that may be the processing module 500 of Fig. 5A described later.

In a step 90, the processing module obtains a target block.

In a step 91, the processing module obtains a three-samples wide/high L-shaped template formed of already reconstructed samples neighbouring the target block. One can note that the shape of the template may be adaptive depending on samples availability.

In a step 92, the processing module derives the Histogram of Oriented Gradients (HoG) from the samples of the template. The HoG is obtained using a Sobel filter, accumulating the magnitudes of all gradients at a given direction, for all the samples within the dashed region in Fig. 8. The bins of the HoG are mapped to the "65" angular modes used in intra prediction.

In a step 93, the processing module selects up to five angular modes with highest cumulative magnitude in the HoG to obtain DIMD modes.

In a step 94, the processing module determines a weight for each of the selected DIMD mode. Each weight depends on the relative magnitudes of the DIMD modes in the HoG.

In a step 95, the processing module computes a weighted sum of the predictors obtained from each DIMD mode and for the planar mode using the determined weights to obtain a final predictor for the target block. All predictions are made using the first reference line, that is, the reference arrays immediately next to the target block.

As the DIMD modes are derived using the neighbouring reconstructed samples, but not the target block's information, the decoder can derive the same up to five best angular modes as the encoder and can compute the DIMD prediction as a weighted sum with the planar mode predictor. For each intra-coded block, a flag namely *DimdFlag* indicating whether a DIMD mode is to be applied or not is signalled.

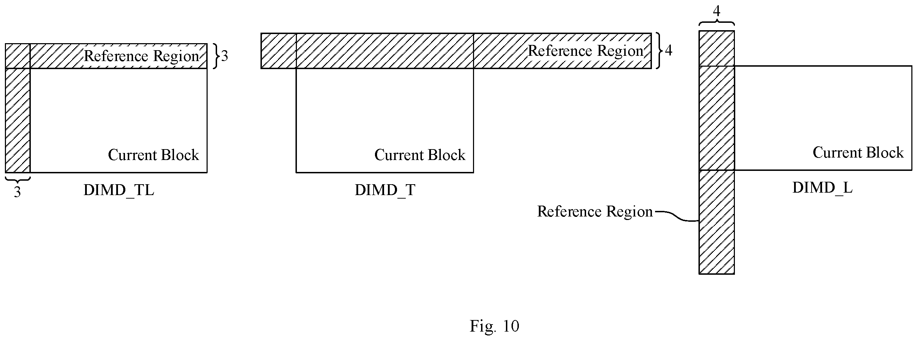

Several variants of the DIMD mode were proposed. For instance, two additional DIMD modes *DIMD_T* and *DIMD_L* allowing selecting different neighbouring samples were proposed. In the DIMD_T mode, top-left, top, and top-right neighbouring samples are used as reference region. In DIMD_L mode, top-left, left, and left-bottom neighbouring samples are used as reference region. The number of lines and columns of samples in the reference region in DIMD_T and DIMD_L modes is "4". The reference region used in these two modes are shown in **Fig. 10.** In each CU, a new flag named *cu_dimd_mode* is signalled after the DIMD enabled flag (*DimdFlag*) to determine which DIMD mode is used.

Another variant is DIMD merge. When using DIMD Merge, the DIMD information extracted from neighboring blocks is used to compute the DIMD prediction for the current block. In particular, a new Merged Histogram of Gradients (MHoG) is computed for the target block based on the HoGs of neighbouring blocks.

In TIMD, instead of signalling an intra prediction mode for a target block explicitly using a list of most probable modes (MPMs), the information is derived at both the encoder and the decoder from the neighbouring reconstructed samples of the target block. A template (indicated by a textured region in **Fig.11**) specifies a set of already reconstructed samples, which are used to derive the intra prediction mode. The template size is denoted as the number of samples within the template that extends to the above and to the left of the current block. For example, a template size of "2" (i.e., $tW = 2$ or $tH = 2$) is used for 4x4 and 8x8 blocks and a template size of "4" (*i.e.,tW*=4 or *tH*=4) is used for 16x16 and larger blocks. In cases, when the left (respectively the top) neighbour block of the current block is not available, the template consists of only the textured region on top (respectively on left) of the current block.

For each intra prediction mode in an MPM list, the decoder computes a prediction from a reference of the template (indicated in Fig. 11). For each prediction, a Sum of Absolute Transformed Differences (SATD) between the prediction and the original reconstructed samples of the template is calculated. In a first step, two initial intra prediction modes corresponding to the minimum SATD are selected. The first initial intra prediction mode with the lowest SATD is denoted $INIT\_IPM_{timd\_1st}$ and the initial intra prediction mode corresponding to the second lowest SATD is denoted $INIT\_IPM_{timd\_2nd}$. In a second step, these two initial intra prediction modes are refined. For each of these two intra prediction modes, if the initial intra prediction mode is neither planar nor DC, a SATD is computed for the two closest extended angular modes (i.e., the two closest angular modes at sample resolution of (1/64)) of the initial angular mode. Two sets each comprising an initial angular mode (resulting from the first step) and two refined angular modes resulting from the refinement are therefore obtained. In each set, the angular mode minimizing the SATD is selected. The angular mode derived from the mode $INIT\_IPM_{timd\_1st}$ is denoted $IPM_{timd\_1st}$ and the angular mode derived from the mode $INIT\_IPM_{timd\_2nd}$ is denoted $IPM_{timd\_2nd}$. Thus, for TIMD, the set of intra prediction modes is extended from "65" to "129", by increasing the angle resolution to (1/64). If the SATD of the selected two angular modes satisfies the condition that $SATD_{IPM\_timd\_2nd} < 2 * SATD_{IPM\_timd\_1st}$, the predictions of the target block obtained with these two angular modes are blended together with weights to get a final TIMD prediction for the target block. The first prediction using the mode $INIT\_IPM_{timd\_1st}$ is obtained with the first reference line (the top and left reference arrays closest to a target block) whereas the second prediction using the mode $INIT\_IPM_{timd\_2nd}$ is obtained with the second reference line (the top and left reference arrays next to the closest). The weights are determined from relative magnitudes of the associated SATDs. Otherwise ($SATD_{IPM\_timd\_2nd} \geq 2 * SATD_{IPM\_timd\_1st}$), only the first angular mode $IPM_{timd\_1st}$ is used for the prediction of the target block as the TIMD mode. In this case, a weighted MRL prediction is performed using the two predictions based on the first and the second reference lines with mode $IPM_{timd\_1st}$, the weights being ¾ and ¼ respectively. A dedicated flag called *timd_flag* is signaled by the encoder to indicate if the best prediction was obtained with the TIMD mode. The *timd_flag* is CABAC encoded after the DIMD flag *DimdFlag,* an MIP flag and an *IntraTmp* flag. Thus, if a decoder decodes these flags to be all zeros, then it decodes the *timd_flag*. If the flag is "1 ", then it derives the two TIMD modes $IPM_{timd\_1st}$ and $IPM_{timd\_2nd}$ exactly in the same manner as the encoder. Then, using the same SATD condition mentioned above, it decides to blend the two predictions or not. If the blending is performed, the blending weights are the same as used by the encoder. If *timd_flag* is decoded to be "0", then the decoder does not derive the TIMD modes.

The inter prediction consists in predicting the pixels of a current block from a block of pixels, referred to as the reference block, of a picture preceding or following the current picture, this picture being referred to as the reference picture. During the coding of a current block in accordance with the inter prediction method, a block of the reference picture closest, in accordance with a similarity criterion, to the current block is determined by a motion estimation step 304. During step 304, a motion vector indicating the position of the reference block in the reference picture is determined. Said motion vector is used during a motion compensation step 305 during which a residual block is calculated in the form of a difference between the current block and the reference block. In first video compression standards, the mono-directional inter prediction mode described above was the only inter mode available. As video compression standards evolve, the family of inter modes has grown significantly and comprises now many different inter modes.

During a selection step 306, the prediction mode optimising the compression performances, in accordance with a rate/distortion optimization criterion (i.e. RDO criterion), among the prediction modes tested (Intra prediction modes, Inter prediction modes), is selected by the encoding module.

When the prediction mode is selected, the residual block is transformed during a step 307. The transformed block is then quantized during a step 309.

Note that the encoding module can skip the transform and apply quantization directly to the non-transformed residual signal. When the current block is coded according to an intra prediction mode, information indicating the selected intra prediction mode are encoded by an entropy encoder during a step 310. When the current block is encoded according to an inter prediction, when appropriate, a motion vector of the block is predicted from a prediction vector selected from a set of motion vector predictors derived from reconstructed blocks situated in a spatial and temporal vicinity of the block to be encoded. The motion information is next encoded by the entropy encoder during step 310 in the form of a motion residual and an index for identifying the prediction vector. The transformed and quantized residual block is encoded by the entropy encoder during step 310.

Note that the encoding module can bypass both transform and quantization, i.e., the entropy encoding is applied on the residual without the application of the transform or quantization processes. The result of the entropy encoding is inserted in an encoded video stream (i.e. in video data) 311.

Metadata such as SEI (supplemental enhancement information) messages can be attached to the encoded video stream311. A SEI message as defined for example in standards such as AVC, HEVC or VVC (or in standard Versatile supplemental enhancement information (VSEI) messages for coded video bitstreams - H.274) is a data container or a syntax structure associated to a video stream and comprising metadata providing information relative to the video stream.

After the quantization step 309, the current block is reconstructed so that the pixels corresponding to that block can be used for future predictions. This reconstruction phase is also referred to as a prediction loop. An inverse quantization is therefore applied to the transformed and quantized residual block during a step 312 and an inverse transformation is applied during a step 313. According to the prediction mode used for the block obtained during a step 314, the predictor block of the block is reconstructed. If the current block is encoded according to an inter prediction mode, the encoding module applies, when appropriate, during a step 316, amotion compensation using the motion vector of the current block in order to identify the reference block of the current block. If the current block is encoded according to an intra prediction mode, during a step 315, the intra prediction mode selected for the current block is used for reconstructing the predictor block of the current block. The predictor block and the reconstructed residual block are added in order to obtain the reconstructed current block.

Following the reconstruction, an in-loop filtering intended to reduce the encoding artefacts is applied, during a step 317, to the reconstructed block. This filtering is called in-loop filtering since this filtering occurs in the prediction loop to obtain at the decoder the same reference pictures as the encoder and thus avoid a drift between the encoding and the decoding processes. In-loop filtering tools comprises deblocking filtering, SAO (Sample adaptive Offset) and ALF (Adaptive Loop Filtering).

When a block is reconstructed, it is inserted during a step 318 into a reconstructed picture stored in a memory 319 of reconstructed pictures generally called Decoded Picture Buffer (DPB). The reconstructed pictures thus stored can then serve as reference pictures for other pictures to be coded.

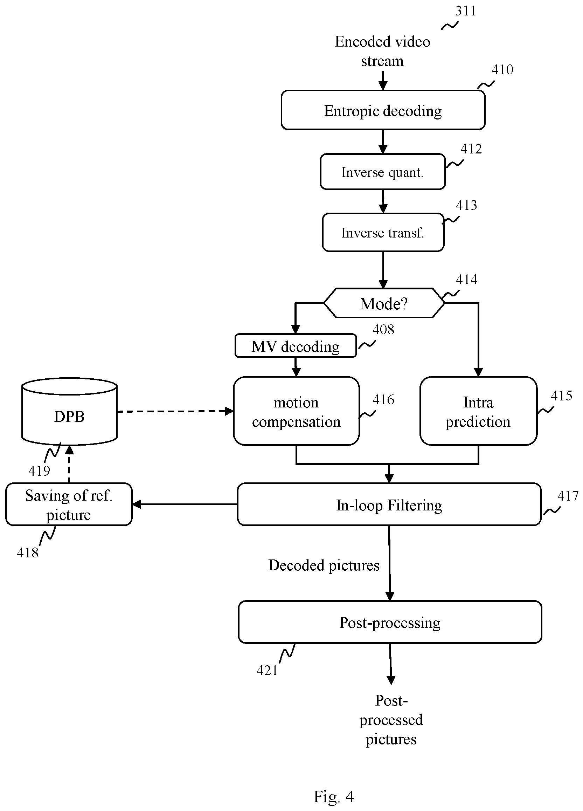

Fig. 4 depicts schematically a method for decoding the encoded video stream (i.e. the video data) 311 encoded according to method described in relation to Fig. 3 executed by a decoding module. For instance, the method for decoding of Fig. 4 is executed by the system 13. Variations of this method for decoding are contemplated, but the method for decoding of Fig. 4 is described below for purposes of clarity without describing all expected variations.

The decoding is done block by block. For a current block, it starts with an entropic decoding of the current block during a step 410. Entropic decoding allows to obtain, at least, the prediction mode of the block.

If the block has been encoded according to an inter prediction mode, the entropy decoding allows to obtain, when appropriate, a motion vector predictor index, a motion residual and a prediction residual block. During a step 408, a motion vector is reconstructed for the current block using the prediction vector index and the motion residual.

If the block has been encoded according to an intra prediction mode (for example DIMD, TIMP, PIP, etc), entropy decoding allows, when appropriate, to obtain a prediction mode and a prediction residual block. Steps 412, 413, 414, 415,416 and 417 implemented by the decoding module are in all respects identical respectively to steps 312, 313, 314, 315, 316 and 317 implemented by the encoding module.

Decoded blocks are saved in decoded pictures and the decoded pictures are stored in a DPB419 in a step 418. When the decoding module decodes a given picture, the pictures stored in the DPB419 are identical to the pictures stored in the DPB319 by the encoding module during the encoding of said given picture. The decoded picture can also be sent as output by the decoding module for instance to be displayed.

Following the in-loop filtering (i.e., following the generation of the decoded pictures), a post-processing step 421 may be applied.

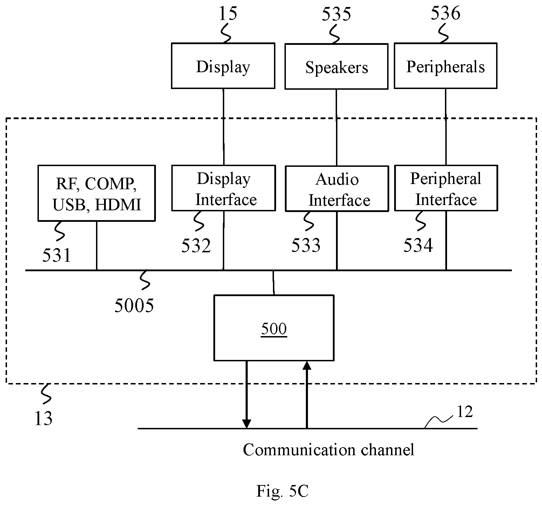

Fig. 5A, 5B and 5C describe examples of device, apparatus and/or system allowing implementing the various embodiments.

**Fig. 5A** illustrates schematically an example of hardware architecture of a processing module500 able to implement an encoding module or a decoding module capable of implementing respectively a method for encoding of Fig. 3and a method for decoding of Fig. 4 modified according to different aspects and embodiments. The encoding module is for example comprised in the system11 when this system is in charge of encoding the video stream. The decoding module is for example comprised in the system 13.

The processing module500 comprises, connected by a communication bus 5005: a processor or CPU (central processing unit) 5000 encompassing one or more microprocessors, general purpose computers, special purpose computers, and processors based on a multi-core architecture, as non-limiting examples; a random access memory (RAM) 5001; a read only memory (ROM) 5002; a storage unit 5003, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 5004 for exchanging data with other modules, devices or system. The communication interface 5004 can include, but is not limited to, a transceiver configured to transmit and to receive data over a communication channel. The communication interface 5004 can include, but is not limited to, a modem or network card.

If the processing module500 implements a decoding module, the communication interface 5004 enables for instance the processing module500 to receive encoded video streams and to provide a sequence of decoded pictures. If the processing module500 implements an encoding module, the communication interface 5004 enables for instance the processing module500 to receive a sequence of original picture data to encode and to provide an encoded video stream.

The processor 5000 is capable of executing instructions loaded into the RAM 5001 from the ROM 5002, from an external memory (not shown), from a storage medium, or from a communication network. When the processing module500 is powered up, the processor 5000 is capable of reading instructions from the RAM 5001 and executing them. These instructions form a computer program causing, for example, the implementation by the processor 5000 of a decoding method as described in relation with Fig. 4 and/or an encoding method described in relation to Fig.3, and methods illustrated in relation to Figs. 6A, 6B, and 7 to 20, these methods comprising various aspects and embodiments described below in this document.

All or some of the algorithms and steps of the methods of Figs. 3, 4, 6A, 6B, and 7 to 20 may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit).

As can be seen, microprocessors, general purpose computers, special purpose computers, processors based or not on a multi-core architecture, DSP, microcontroller, FPGA and ASIC are electronic circuitry adapted or configured to implement at least partially the methods of Figs. 3, 4, 6A, 6B and 7 to 20.

**Fig. 5C** illustrates a block diagram of an example of the system 13in which various aspects and embodiments are implemented. The system 13 can be embodied as a device including the various components described below and is configured to perform one or more of the aspects and embodiments described in this document. Examples of such devices include, but are not limited to, various electronic devices such as personal computers, laptop computers, smartphones, tablet computers, digital multimedia set top boxes, digital television receivers, personal video recording systems, connected home appliances and head mounted display. Elements of system 13, singly or in combination, can be embodied in a single integrated circuit (IC), multiple ICs, and/or discrete components. For example, in at least one embodiment, the system 13 comprises one processing module 500 that implements a decoding module. In various embodiments, the system 13 is communicatively coupled to one or more other systems, or other electronic devices, via, for example, a communications bus or through dedicated input and/or output ports. In various embodiments, the system 13 is configured to implement one or more of the aspects described in this document.

The input to the processing module 500 can be provided through various input modules as indicated in block 531. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 5C, include composite video.

In various embodiments, the input modules of block 531 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF module and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system 13 to other electronic devices across USB and/or HDMI connections. It is to be understood that various aspects of input processing, for example, Reed-Solomon error correction, can be implemented, for example, within a separate input processing IC or within the processing module 500 as necessary. Similarly, aspects of USB or HDMI interface processing can be implemented within separate interface ICs or within the processing module 500 as necessary. The demodulated, error corrected, and demultiplexed stream is provided to the processing module 500.

Various elements of system 13 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 13, the processing module 500 is interconnected to other elements of said system 13 by the bus 5005.

The communication interface 5004 of the processing module 500 allows the system 13 to communicate on the communication channel 12. As already mentioned above, the communication channel 12 can be implemented, for example, within a wired and/or a wireless medium.

Data is streamed, or otherwise provided, to the system 13, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 13 using the RF connection of the input block 531. As indicated above, various embodiments provide data in a non-streaming manner. Additionally, various embodiments use wireless networks other than Wi-Fi, for example a cellular network or a Bluetooth network.

The system 13 can provide an output signal to various output devices, including the display system15, speakers 535, and other peripheral devices 536. The display system15 of various embodiments includes one or more of, for example, a touchscreen display, an organic light-emitting diode (OLED) display, a curved display, and/or a foldable display. The display system 15 can be for a television, a tablet, a laptop, a cell phone (mobile phone), a head mounted display or other devices. The display system15 can also be integrated with other components (for example, as in a smart phone), or separate (for example, an external monitor for a laptop). The other peripheral devices 536 include, in various examples of embodiments, one or more of a stand-alone digital video disc (or digital versatile disc) (DVR, for both terms), a disk player, a stereo system, and/or a lighting system. Various embodiments use one or more peripheral devices 536 that provide a function based on the output of the system 13. For example, a disk player performs the function of playing an output of the system 13.

In various embodiments, control signals are communicated between the system 13 and the display system15, speakers 535, or other peripheral devices 536 using signaling such as AV.Link, Consumer Electronics Control (CEC), or other communications protocols that enable device-to-device control with or without user intervention. The output devices can be communicatively coupled to system 13 via dedicated connections through respective interfaces 532, 533, and 534. Alternatively, the output devices can be connected to system 13 using the communications channel 12 via the communications interface 5004 or a dedicated communication channel corresponding to the communication channel 12in Fig. 5Cvia the communication interface 5004. The display system15 and speakers 535 can be integrated in a single unit with the other components of system 13 in an electronic device such as, for example, a television. In various embodiments, the display interface 532 includes a display driver, such as, for example, a timing controller (T Con) chip.

The display system 15 and speaker 535 can alternatively be separate from one or more of the other components. In various embodiments in which the display system15 and speakers 535 are external components, the output signal can be provided via dedicated output connections, including, for example, HDMI ports, USB ports, or COMP outputs.

**Fig. 5B** illustrates a block diagram of an example of the system 11 in which various aspects and embodiments are implemented. System 11 is very similar to system 13. The system 11 can be embodied as a device including the various components described below and is configured to perform one or more of the aspects and embodiments described in this document. Examples of such devices include, but are not limited to, various electronic devices such as personal computers, laptop computers, smartphones, tablet computers, a camera and a server. Elements of system 11, singly or in combination, can be embodied in a single integrated circuit (IC), multiple ICs, and/or discrete components. For example, in at least one embodiment, the system 11 comprises one processing module 500 that implements an encoding module. In various embodiments, the system 11 is communicatively coupled to one or more other systems, or other electronic devices, via, for example, a communications bus or through dedicated input and/or output ports. In various embodiments, the system 11 is configured to implement one or more of the aspects described in this document.

The input to the processing module 500 can be provided through various input modules as indicated in block 531 already described in relation to Fig. 5C.

Various elements of system 11 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 11, the processing module 500 is interconnected to other elements of said system 11 by the bus 5005.

The communication interface 5004 of the processing module 500 allows the system 11 to communicate on the communication channel 12.

Data is streamed, or otherwise provided, to the system 11, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 11 using the RF connection of the input block 531.

As indicated above, various embodiments provide data in a non-streaming manner. Additionally, various embodiments use wireless networks other than Wi-Fi, for example a cellular network or a Bluetooth network.

The data provided to the system 11 can be provided in different format. In various embodiments these data are encoded and compliant with a known video compression format such as AV1, VP9, VVC, HEVC, AVC, etc. In various embodiments, these data are raw data provided for example by a picture and/or audio acquisition module connected to the system 11 or comprised in the system 11. In that case, the processing module 500 take in charge the encoding of these data.

The system 11 can provide an output signal to various output devices capable of storing and/or decoding the output signal such as the system 13.

Various implementations involve decoding. "Decoding", as used in this application, can encompass all or part of the processes performed, for example, on a received encoded video stream in order to produce a final output suitable for display. In various embodiments, such processes include one or more of the processes typically performed by a decoder, for example, entropy decoding, inverse quantization, inverse transformation, and prediction. In various embodiments, such processes also, or alternatively, include processes performed by a decoder of various implementations described in this application, for example, for applying a combination of DIMD or TIMD with PIP according to an embodiment of this application.

Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded video stream. In various embodiments, such processes include one or more of the processes typically performed by an encoder, for example, partitioning, prediction, transformation, quantization, and entropy encoding. In various embodiments, such processes also, or alternatively, include processes performed by an encoder of various implementations described in this application, for example, for applying a combination of DIMD or TIMD with PIP according to an embodiment of this application.

Whether the phrase "encoding process" is intended to refer specifically to a subset of operations or generally to the broader encoding process will be clear based on the context of the specific descriptions and is believed to be well understood by those skilled in the art.

Note that the syntax elements names as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between a rate and a distortion is usually considered. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of a reconstructed signal after coding and decoding. Faster approaches may also be used, to save encoding complexity, in particular with computation of an approximated distortion based on a prediction or a prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a use of some coding tools. In this way, in an embodiment the same parameters can be used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can include a signal indicating a selected intra prediction mode. Such a signal can be formatted, for example, as an electromagnetic wave (for example, using a radio frequency portion of spectrum) or as a baseband signal. The formatting can include, for example, encoding an encoded video stream and modulating a carrier with the encoded video stream. The information that the signal carries can be, for example, analog or digital information. The signal can be transmitted over a variety of different wired or wireless links, as is known. The signal can be stored on a processor-readable medium.

In the following, various embodiments propose to use processes applied in the DIMD and TIMD modes to reduce the overhead required for signaling the perspective point in the PIP mode.

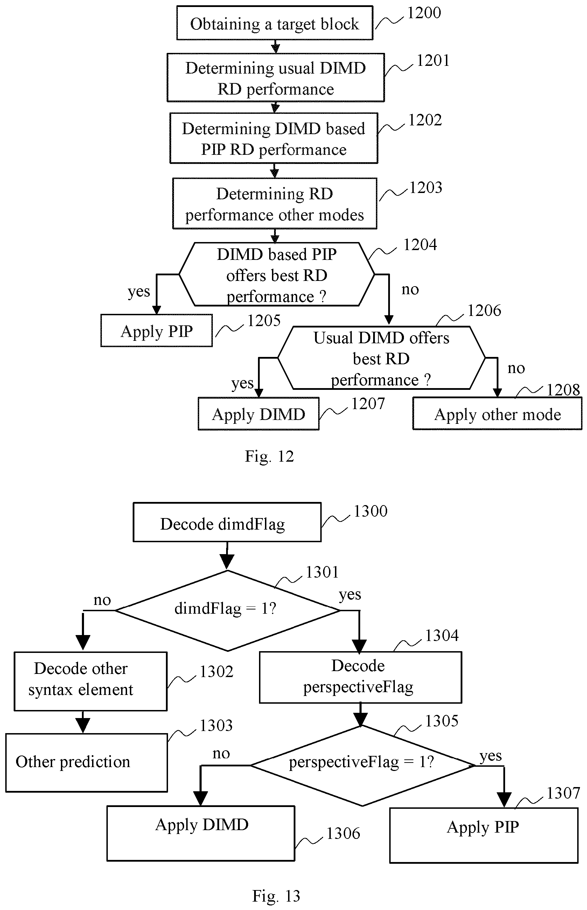

**Fig. 12** illustrates schematically a process for encoding a target block according to a first embodiment.

The process of Fig. 12 is executed by the processing module 500 of the system 11 when the system 11 implements an encoder. The encoder is for example the encoder of Fig. 3 with a modified step 303 implementing the first embodiment.

In a step 1200, the processing module 500 obtains a target block to encode.

In steps 1201, 1202 and 1203, the processing module 500 determines the RD performances of the DIMD mode without PIP (called *usual DIMD mode* in the following), of a combination of the DIMD mode with PIP, called *DIMD based PIP* in the following, and of other prediction modes implemented by the encoder of Fig. 3 when these modes are applied to the target block. In the example of the first embodiment, when DIMD is applied (with the usual DIMD mode or the DIMD based PIP mode), the predictions are obtained using only the first reference line.

Here, the DIMD based PIP mode of step 1202 comprises using at least partially the process of the DIMD mode until obtaining at least one angular mode. At least one perspective point is then determined from the at least one angular mode. Each determined perspective point is then used to determine a PIP predictor (a predictor obtained by applying the PIP mode). In an embodiment, a single angular mode is determined. This single angular mode corresponds to the direction with highest cumulative magnitude in the HoG obtained applying the DIMD process.

In the first embodiment, in the DIMD based PIP mode, there is no blending of the PIP predictor with other predictions obtained for example with other modes selected applying the usual DIMD process. The PIP predictor is a final PIP predictor of the DIMD based PIP mode.

In an embodiment, PDPC is applied after the DIMD based PIP prediction.

In step 1201, the usual DIMD process is applied to obtain a DIMD predictor for the target block.

In a step 1204, the processing module 500 determines if the DIMD based PIP mode offers the best RD performance. If yes, the DIMD based PIP predictor is used to predict the target block in a step 1205. Furthermore, in step 1205, the processing module 500 signals in a bitstream (in video data) a flag *DimdFlag* equal to "1" signaling that DIMD is enabled for the target block and a flag *perspectiveFlag* equal to "1" signaling that the final DIMD based PIP predictor shall be used for predicting the target block.

If the DIMD based PIP mode doesn't offer the best RD performance, the processing module 500 continues with a step 1206. During step 1206, the processing module 500 determines if the usual DIMD mode offers the best RD performance. If yes, the processing module 500 uses the DIMD predictor (obtained using the usual DIMD process) to predict the target block in a step 1207. In addition, in step 1207, the processing module 500 signals a flag *DimdFlag* equal to "1" signaling that DIMD is enabled for the target block and a flag *perspectiveFlag* equal to "0" signaling that the usual DIMD predictor shall be used for predicting the target block.

If the usual DIMD mode doesn't offer the best RD performance, the processing module 500 continues with a step 1208. During step 1208, the processing module 500 applies another intra or inter prediction mode to predict the target block and signal a flag *DimdFlag* equal to "0" (no flag *perspectiveFlag* is signaled).

**Fig. 13** illustrates schematically a process for decoding a target block according to the first embodiment.

The process of Fig. 13 is executed by the processing module 500 of the system 13 when the system 13 implements a decoder. The decoder is for example the decoder of Fig. 4 with a modified step 415 implementing the various embodiments.

In a step 1300, the processing module 500 decodes a flag *DimdFlag*.

In a step 1301, the processing module 500 determines if the flag *DimdFlag* is equal to "1".

Responsive to the flag *DimdFlag* is equal to "1", the processing module 500 decodes a flag *perspectiveFlag*.

In a step 1304, the processing module 500 determines if the flag *perspectiveFlag* is equal to "1".

If the flag *perspectiveFlag* is equal to "1", in a step 1307, the processing module 500 applies the DIMD process to determine a single angular mode corresponding to the direction with highest cumulative magnitude in the HoG. From the determined angular mode, the processing module 500 determines a perspective point and applies the PIP mode to obtain a DIMD based PIP predictor. The DIMD based PIP predictor is then used to predict the target block.

In an embodiment, PDPC is applied after the DIMD based PIP prediction.

If the flag *perspectiveFlag* is equal to "0", in a step 1306, the processing module 500 applies the usual DIMD process to determine a DIMD predictor. The DIMD predictor is then used to predict the target block.

Responsive to the flag *DimdFlag* is equal to "0", the processing module 500 decodes other syntax elements in a step 1302 and determines a predictor based on the decoded syntax elements. The obtained predictor is used to predict the target block.

In the above Embodiment, both the usual DIMD mode and the DIMD based PIP mode are applied with the first reference line, that is, using the reference arrays immediately above and on left of a target block. In a second embodiment, the constraint on the reference line is relaxed. Predictions in the DIMD mode and the DIMD based PIP mode are applied with multiple reference lines, for example, with reference lines with indices "0", "1", and "3". Here, a reference line with index *N* consists of the reference arrays above and on left of a target block at offset of "N" pixels. The second embodiment comprises a signaling of the reference line index besides the signaling of the flag *dimdFlag* and the flag *perspectiveFlag.*

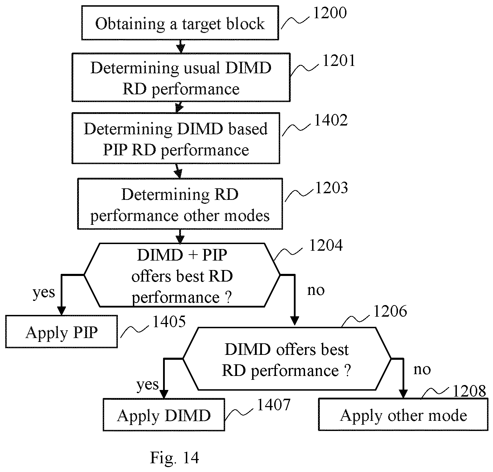

**Fig. 14** illustrates schematically a process for encoding a target block according to the second embodiment.

The process of Fig. 14 is executed by the processing module 500 of the system 11 when the system 11 implements an encoder. The encoder is for example the encoder of Fig. 3 with a modified step 303 implementing the second embodiment.

The process of Fig. 14 is identical to the process of Fig. 12 except in steps 1202, 1205 and 1207 replaced respectively by steps 1402, 1405 and 1407.

In step 1402, the processing module 500 determines the reference line index *multiRefIdx_PIP* allowing obtaining the best RD performances for DIMD based PIP mode.

In step 1405, the DIMD based PIP predictor is used to predict the target block. Furthermore, in step 1405, the processing module 500 signals in a bitstream (in video data) a flag *DimdFlag* equal to "1" signaling that DIMD is enabled for the target block, a syntax element *multiRefIdx* equal to *multirefIdx_PIP* signaling the best reference line and a flag *perspectiveFlag* equal to "1" signaling that the DIMD based PIP predictor shall be used for predicting the target block.

In step 1407, the DIMD predictor obtained applying the usual DIMD mode is used to predict the target block. Furthermore, in step 1407, the processing module 500 signals in a bitstream (in video data) a flag *DimdFlag* equal to "1" signaling that DIMD is enabled for the target block, a syntax element *multiRefIdx* equal to "0" signaling that the first reference line shall be used and a flag *perspectiveFlag* equal to "0" signaling that the DIMD predictor shall be used for predicting the target block.

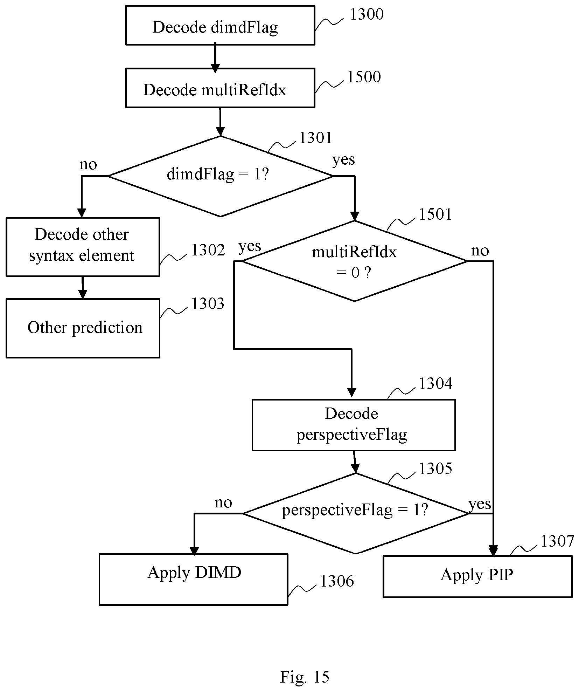

**Fig. 15** illustrates schematically a process for decoding a target block according to the second embodiment.

The process of Fig. 15 is executed by the processing module 500 of the system 13 when the system 13 implements a decoder. The decoder is for example the decoder of Fig. 4 with a modified step 415 implementing the second embodiments.

All steps described in relation to Fig. 13 are kept in the process of Fig. 15 and remains identical.

Step 1300 is followed by a step 1500 during which the processing module 500 decodes a syntax element *multiRefIdx.*

Step 1500 is followed by step 1301. If the flag *dimdFlag* is equal to 1, the processing module 500 continues with a step 1501. During step 1501, the processing module 500 determines if the syntax element *multiRefIdx* is equal to "0".

Responsive to the syntax element *multiRefIdx* is different from "0", the processing module 500 knows directly that the DIMD based PIP mode is to be applied. Therefore, step 1501 is followed by step 1307.

Responsive to the syntax element *multiRefIdx* is equal to "0", the processing module 500 continues with step 1304, 1305 and 1306 or 1307 as in Fig. 13.

Until now, we have considered that in the DIMD based PIP mode, a single angular mode corresponding to the direction with the highest cumulative magnitude in the HoG is determined using the DIMD process. In a third embodiment, during steps 1202 or 1402, the processing module 500 selects up to five directions with highest cumulative magnitude in the HoG. Each selected direction allows determining an angular mode. The determined angular modes allow determining a set of perspective points. Each perspective point of the set is considered for applying the PIP mode and the one offering the best DIMD based PIP predictor (the DIMD based PIP predictor offering the best RD performance between all DIMD based PIP predictors) is the final DIMD based PIP predictor. If this final DIMD based PIP predictor provides the best predictor for the target block, in steps 1205 or 1405, the processing module 500 encodes a syntax element *modeFlag* indicating which direction of the up to five directions with highest cumulative magnitude in the HoG had been selected. Thanks to the syntax element *modeFlag,* the decoder knows which direction considering for determining the perspective point to be used when applying the DIMD based PIP mode. In a variant, the number of directions that can be selected by the processing module 500 in steps 1202 or 1402 is limited to two (the two directions corresponding to the two highest cumulative magnitudes in the HoG). In that case, the syntax element *modeFlag* is a flag indicating with a first value that the direction corresponding to the highest magnitude in the HoG was selected and with a second value that the second highest magnitude in the HoG was selected.

In a fourth embodiment, which can be viewed as a variant of the second and the third embodiment, the direction corresponding to the highest magnitude in the HoG is associated to the first reference line and the direction corresponding to the second highest magnitude in the HoG is associated to the second reference line. Therefore, by knowing the value of the syntax element *multiRefIdx* it is possible to know which direction was selected by the encoder. Hence, there is no need of signaling an additional syntax element indicating the selected direction (*modeFlag*).

The usual DIMD prediction can be limited to only using the first reference line or can be extended to include both the first and the second reference line. In the case the usual DIMD prediction is restricted to only the first reference line, there is no need of encoding the flag *perspectiveFlag* when the flag *dimdFlag* is equal to "1" and the syntax element *multiRefIdx* is greater than "0" (similarly to the second embodiment when the processing module 500 applies directly step 1307 after step 1501).

In a fifth embodiment, which is a variant of the fourth embodiment, five directions corresponding to the five highest magnitude in the HoG are considered. The signaling depends on the number of reference lines used and on the assignment of the directions to the reference lines. If the assignment is one-to-one, that is, each direction is used with a different reference line, then no additional syntax element is necessary to signal the direction, the syntax element *multiRefIdx* being used to signal the reference line and the selected direction (similar to the fourth Embodiment). If, however, multiple directions are using a same reference line or multiple reference lines are possible for each direction, then a suitable signaling method needs to be used to distinguish between the directions. For example, reference line "0" may be used with the direction corresponding to the highest magnitude in the HoG, reference line "1" may be used with the direction corresponding to the second highest magnitude in the HoG and with the direction corresponding to the third highest magnitude in the HoG, and reference line "2" may be used with the direction corresponding to the fourth highest magnitude in the HoG and with the direction corresponding to the fifth highest magnitude in the HoG. Therefore, responsive to the reference line "1" and reference line "2" is signaled by the syntax element *multiRefIdx,* a 1-bit flag (*modeFlag*) is signaled after the signaling of the syntax element *multiRefIdx* to indicate the prediction mode used by the encoder.

In a sixth embodiment, the at least a part of the process of the TIMD mode is applied to determine the perspective point of the PIP mode.

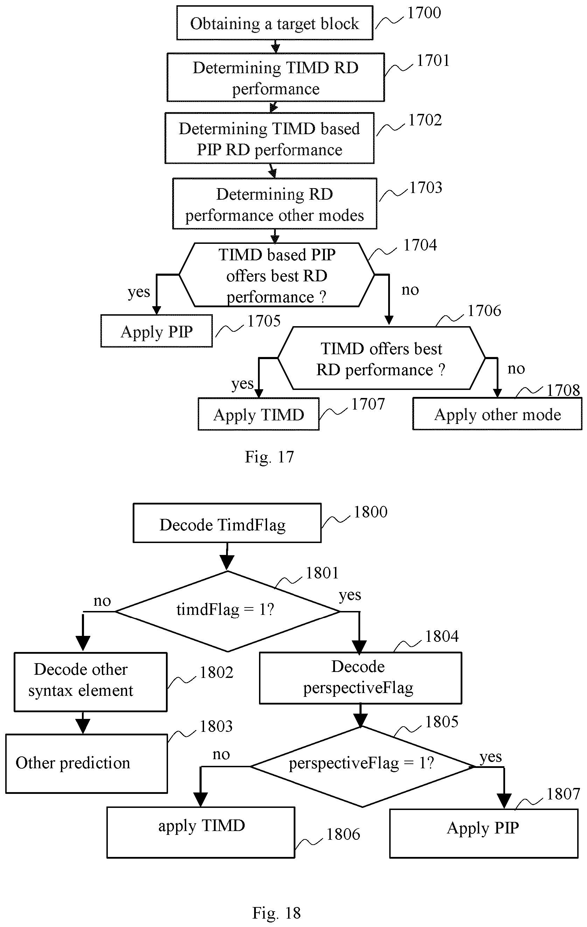

**Fig. 17** illustrates schematically a process for encoding a target block according to a sixth embodiment.

The process of Fig. 17 is executed by the processing module 500 of the system 11 when the system 11 implements an encoder. The encoder is for example the encoder of Fig. 3 with a modified step 303 implementing the first embodiment.

In a step 1700, the processing module 500 obtains a target block to encode.

In steps 1701, 1702 and 1703, the processing module 500 determines the RD performances of the TIMD mode as defined in ECM (called *usual TIMD* mode in the following), of a combination of the TIMD mode with PIP, called *TIMD based PIP mode* in the following, where at least a part of the process of the TIMD mode allows determining a perspective point used by the PIP mode and of other prediction modes implemented by the encoder of Fig. 3 when these modes are applied to the target block. In the example of the sixth embodiment, when the usual TIMD mode or the TIMD based PIP mode are applied, the predictions are obtained using only the first reference line.

During step 1702, the processing module 500 determines if the first TIMD mode, that is $IPM_{timd\_1st}$, is an angular mode (not planar nor DC). If the first TIMD mode $IPM_{timd\_1st}$ is an angular mode, the processing module 500 determines the RD performance when applying the PIP mode with the first TIMD mode $IPM_{timd\_1st}$ to obtain a TIMD based PIP predictor. If the first TIMD mode $IPM_{timd\_1st}$ is not a directional mode but a planar or a DC mode, then the processing module 500 (optionally) checks the secondary TIMD mode $IPM_{timd\_2nd}$. If the secondary TIMD mode $IPM_{timd\_2nd}$ is angular mode, the processing module 500 determines the RD performance when applying the PIP mode with the second TIMD mode $IPM_{timd\_2nd}$ to obtain a TIMD based PIP predictor. If the secondary mode $IPM_{timd\_2nd}$ is also not an angular mode, then the processing module 500 (optionally) applies the PIP mode using the strictly vertical mode, denoted as EXT_VER_IDX. The processing module 500 determines then the RD performance when applying the PIP mode with the mode EXT_VER_IDX to determine the TIMD based PIP predictor.

In a variant, if the first TIMD mode $IPM_{timd\_1st}$ is not an angular mode, the processing module 500 decides that the TIMD based PIP mode is not applied. In a second variant, if the first TIMD mode $IPM_{timd\_1st}$ and the second TIMD mode $IPM_{timd\_2nd}$ are not angular modes, the processing module 500 decides that TIMD based PIP mode is not applied.

In step 1701, the processing module 500 applies the TIMD mode as defined in ECM. It performs a first prediction with $IPM_{timd\_1st}$ using the first reference line and a second prediction with $IPM_{timd\_2nd}$ using the second reference line and blends the two predictions if the blending condition is satisfied.

In a step 1704, the processing module 500 determines if the TIMD based PIP mode offers the best RD performance. If yes, the TIMD based PIP predictor is used to predict the target block in a step 1705. Furthermore, in step 1705, the processing module 500 signals in a bitstream (in video data) a flag *timd_flag* equal to "1" signaling that TIMD is enabled for the target block and a flag *perspectiveFlag* equal to "1" signaling that the TIMD based PIP predictor shall be used for predicting the target block.

If the TIMD based PIP mode doesn't offer the best RD performance, the processing module 500 continues with a step 1706. During step 1706, the processing module 500 determines if the usual TIMD mode offers the best RD performance. If yes, the processing module 500 uses the TIMD predictor (obtained using the usual TIMD process) to predict the target block in a step 1707. In addition, in step 1707, the processing module 500 signals a flag *timd_flag* equal to "1" signaling that TIMD is enabled for the target block and a flag *perspectiveFlag* equal to "0" signaling that the usual TIMD predictor shall be used for predicting the target block.

If the TIMD mode doesn't offer the best RD performance, the processing module 500 continues with a step 1708. During step 1708, the processing module 500 applies another intra or inter prediction mode to predict the target block and signals a flag *timd_flag* equal to "0" (no flag *perspectiveFlag* is signaled).

**Fig. 18** illustrates schematically a process for decoding a target block according to the sixth embodiment.

The process of Fig. 18 is executed by the processing module 500 of the system 13 when the system 13 implements a decoder. The decoder is for example the decoder of Fig. 4 with a modified step 415 implementing the various embodiments.

In a step 1800, the processing module 500 decodes a flag *timd_flag.*

In a step 1801, the processing module 500 determines if the flag *timd_flag* is equal to "1".

Responsive to the flag *timd_flag* is equal to "1", the processing module 500 decodes a flag *perspectiveFlag.*

In a step 1804, the processing module 500 determines if the flag *perspectiveFlag* is equal to "1". If the flag *perspectiveFlag* is equal to "1", in a step 1807, the processing module 500 applies the TIMD process to determine an angular mode (for example between the first TIMD mode $IPM_{timd\_1st}$, the second TIMD mode $IPM_{timd\_2nd}$ and the mode EXT_VER_IDX). From the determined angular mode, the processing module 500 determines a perspective point and applies the PIP mode to obtain a TIMD based PIP predictor. The TIMD based PIP predictor is then used to predict the target block.

If the flag *perspectiveFlag* is equal to "0", in a step 1806, the processing module 500 applies the usual TIMD process to determine a TIMD predictor. The TIMD predictor is then used to predict the target block.

Responsive to the flag *timd_flag* is equal to "0", the processing module 500 decodes other syntax elements in a step 1802 and determines a predictor based on the decoded syntax elements. The obtained predictor is used to predict the target block.

In the above sixth embodiment, the TIMD based PIP mode is applied with the first reference line, that is, using the reference arrays immediately above and on left of a target block. In a seventh embodiment, the constraint on the reference line is relaxed. The TIMD based PIP mode is applied with multiple reference lines, for example, with reference lines with indices "0", "1", and "3". The number of reference lines to be checked is a variable number and depends on their availability. The seventh embodiment comprises a signaling of the reference line index besides the signaling of the flag *timdFlag* and the flag *perspectiveFlag.*

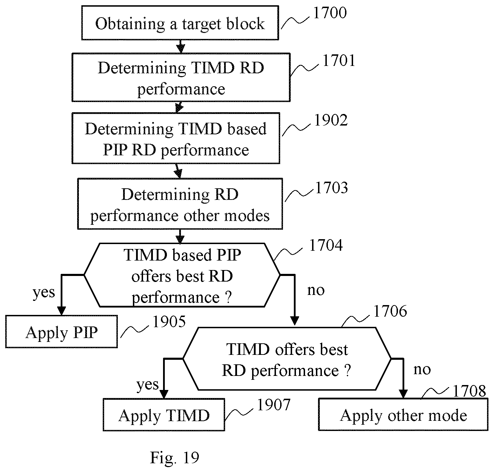

**Fig. 19** illustrates schematically a process for encoding a target block according to the seventh embodiment.

The process of Fig. 19 is executed by the processing module 500 of the system 11 when the system 11 implements an encoder. The encoder is for example the encoder of Fig. 3 with a modified step 303 implementing the second embodiment.

The process of Fig. 19 is identical to the process of Fig. 17 except in steps 1702 and 1705 replaced respectively by steps 1902 and 1905.

In step 1902, the processing module 500 determines the reference line index *multiRefIdx_PIP* allowing obtaining the best RD performances of the TIMD based PIP mode.

In step 1905, the TIMD based PIP predictor is used to predict the target block. Furthermore, in step 1905, the processing module 500 signals in a bitstream (in video data) a flag *timd_flag* equal to "1" signaling that TIMD is enabled for the target block, a flag *perspectiveFlag* equal to "1" signaling that the TIMD based PIP predictor shall be used for predicting the target block and a syntax element *multiRefIdx* equal to *multireFIdx_PIP* signaling the best reference line.

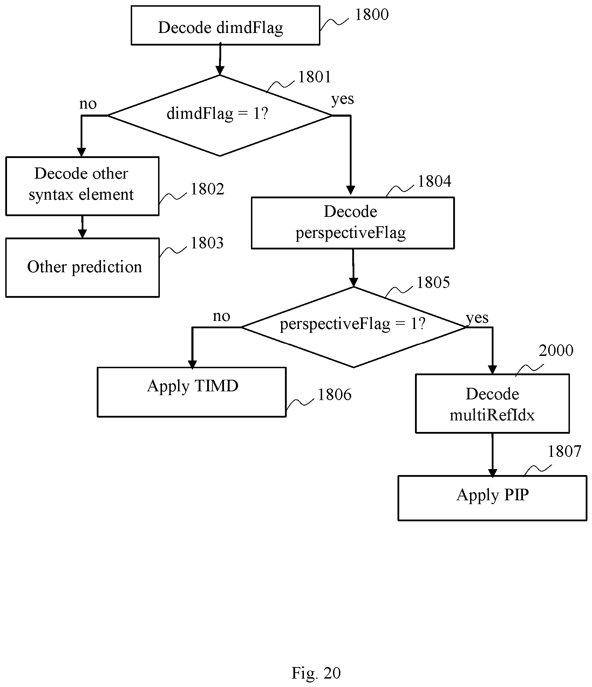

**Fig. 20** illustrates schematically a process for decoding a target block according to the seventh embodiment.

The process of Fig. 20 is executed by the processing module 500 of the system 13 when the system 13 implements a decoder. The decoder is for example the decoder of Fig. 4 with a modified step 415 implementing the second embodiments.

All steps described in relation to Fig. 18 are kept but a step 2000 is added.

Step 1805 is followed by a step 2000 during which the processing module 500 decodes a syntax element *multiRefIdx* indicating a reference line to be used when applying the TIMD based PIP mode.

Step 2000 is followed by step 1807 during which the processing module 500 applies the TIMD process to determine an angular mode (for example between the first TIMD mode $IPM_{timd\_1st}$, the second TIMD mode $IPM_{timd\_2nd}$ and the mode EXT_VER_IDX). From the determined angular mode, the processing module 500 determines a perspective point and applies the PIP mode to obtain a TIMD based PIP predictor using the reference line indicated by the syntax element *multiRefIdx.* The TIMD based PIP predictor is then used to predict the target block.

In a variant of the seventh embodiment, the processing module 500 of the system 11 (implementing an encoder) applies the usual TIMD mode only with the first reference line, i.e., the TIMD predictor based on the first TIMD mode $IPM_{timd\_1st}$ and TIMD predictor based on the second TIMD mode $IPM_{timd\_2nd}$ are determined using both the first reference line. In this variant, the flag *perspectiveFlag* is signaled only if the flag *timd_flag* is equal to "1" and the syntax element *multiRefIdx* is equal to "0". If the flag *timd_flag* is equal to "1" but the syntax element *multiRefIdx* is greater than "0", the processing module 500 of the system 11 doesn't signal the flag *perspectiveFlag,* Indeed, if the flag *timd_flag* is equal to "1" and the syntax element *multiRefIdx* is greater than "0", the processing module 500 of the system 13 (implementing a decoder) knows that the flag *perspectiveFlag* is equal to "1".

In another variant of the seventh embodiment, the processing module 500 of the system 11 (implementing an encoder) applies the PIP prediction with the first TIMD mode $IPM_{timd\_1st}$ using the first reference line and applies the PIP prediction with the secondary TIMD mode $IPM_{timd\_2nd}$ using the second reference line. If either of them is planar or DC mode, then the processing module 500 of the system 11 uses the strictly vertical mode EXT_VER_IDX in replacement with the first reference line if it replaces the TIMD mode $IPM_{timd\_1st}$ and with the second reference line if it replaces the secondary TIMD mode $IPM_{timd\_2nd}$. The processing module 500 of the system 11 signals the flag *timd_flag* as "1" if the TIMD predictor obtained using the usual TIMD mode or TIMD based PIP predictor results in the best RD performance for a target block. It also encodes the reference line index *multiRefIdx* irrespective of whether the usual TIMD mode is applied with multiple reference lines or not. It encodes the flag *perspectiveFlag* if the flag *timd_flag* is equal to "1" and the syntax element *multiRefIdx* is equal to "0". If the flag *timdFlag* is equal to "1" and the syntax element *multiRefIdx* is equal to "1", then the flag *perspectiveFlag* is signaled in case the usual TIMD mode is also allowed with the second reference line (*multiRefIdx*=1)*.* Otherwise, there is no need to signal the flag *perspectiveFlag.* The processing module 500 of the system 13 (implementing a decoder) decodes the flag *perspectiveFlag* if the decoded value of the flag *timd_flag* is equal to "1" and if the syntax element *multiRefIdx* is equal to "0". On the contrary, if the flag *timd_flag* and the syntax element *multiRefIdx* are both equal to "1", then the processing module 500 of the system 13 decodes the flag *perspectiveFlag* only if the usual TIMD mode is also allowed with the second reference line. Otherwise, it infers the value of the flag *perspectiveFlag* as "1". If the decoded value of the flag *timd_flag* is "0", then the processing module 500 of the system 13 infers the value of the flag *perspectiveFlag* as "0", which is the default value.

In an eighth embodiment, similarly to the fifth embodiment based on DIMD, more than two angular modes are determined using the TIMD process and the angular mode offering the best TIMD based PIP predictor in terms RD performance is kept. For example, a first TIMD mode $IPM_{timd\_1st}$ is determined from the angular mode $INIT\_IPM_{timd\_1st}$ with the lowest SATD, a second TIMD mode $IPM_{timd\_2nd}$ is determined from the angular mode $INIT\_IPM_{timd\_2nd}$ corresponding to the second lowest SATD and a third TIMD mode $IPM_{timd\_3rd}$ is determined from the angular mode $INIT\_IPM_{timd\_3rd}$ corresponding to the third lowest SATD. If the kept TIMD based PIP predictor offers the best RD performance for the target block, the processing module 500 of the system 11 signals a flag *timd_flag* equal to "1", a flag *perspectiveFlag* equal to "1" and an information representing the selected angular mode. If a different reference line is associated to each TIMD mode (for example, the first reference line is associated to the first angular mode $IPM_{timd\_1st}$, the second reference line is associated to the second angular mode $IPM_{timd\_2nd}$, and the third reference line is associated to the third angular mode $IPM_{timd\_3rd}$). the syntax element *multiRefIdx* may be used to signal the selected angular mode to be used to apply the TIMD based PIP mode.

If any reference line can be associated with multiple angular modes, a syntax element *modeIdx* indicating which mode to be used for the TIMD based PIP mode to the target block is signaled in addition to the syntax element *multiRefIdx* indicating the reference line to be used.

In the above embodiments, the TIMD based PIP mode is applied using one perspective point. In another embodiment, the TIMD based PIP mode is applied with multiple perspective points. In that case, the encoder signals the index of the perspective point used in the PIP prediction.

We described above a number of embodiments. Features of these embodiments can be provided alone or in any combination. Further, embodiments can include one or more of the following features, devices, or aspects, alone or in any combination, across various claim categories and types:

- A bitstream or signal that includes one or more of the described syntax elements, or variations thereof.
- Creating and/or transmitting and/or receiving and/or decoding a bitstream or signal that includes one or more of the described syntax elements, or variations thereof.
- A TV, set-top box, cell phone, tablet, or other electronic device that performs at least one of the embodiments described.
- A TV, set-top box, cell phone, tablet, or other electronic device that performs at least one of the embodiments described, and that displays (e.g. using a monitor, screen, or other type of display) a resulting picture.
- A TV, set-top box, cell phone, tablet, or other electronic device that tunes (e.g. using a tuner) a channel to receive a signal including an encoded video stream, and performs at least one of the embodiments described.
- A TV, set-top box, cell phone, tablet, or other electronic device that receives (e.g. using an antenna) a signal over the air that includes an encoded video stream, and performs at least one of the embodiments described.

- A server, camera, cell phone, tablet or other electronic device that transmits (e.g. using an antenna) a signal over the air that includes an encoded video stream, and performs at least one of the embodiments described.
- A server, camera, cell phone, tablet or other electronic device that tunes (e.g. using a tuner) a channel to transmit a signal including an encoded video stream, and performs at least one of the embodiments described.

**Claims**

1. A method for encoding comprising:

   applying (1202) a backward intra prediction process until obtaining at least one angular mode for a target block, at least one perspective point in a neighborhood of the target block being determined from the at least one angular mode;
   applying (1202) a perspective intra prediction (PIP) from reconstructed samples in the neighborhood of the target block to generate a PIP predictor using at least one of the determined at least one perspective point;
   predicting (1205) the target block using the PIP predictor.

2. A method for decoding comprising:

   applying (1307) a backward intra prediction process until obtaining at least one angular mode for a target block, at least one perspective point in a neighborhood of the target block being determined from the at least one angular mode;
   applying (1307) a perspective intra prediction (PIP) from samples in the neighborhood of the target block to generate a PIP predictor using at least one of the determined at least one perspective point;
   predicting (1307) the target block using the PIP predictor.

3. The method according to claim 1 or 2 wherein, the backward intra prediction process is Decoder Side Intra mode Derivation (DIMD).

4. The method according to claim 3 comprising signaling in video data or decoding from video data information indicating that DIMD is enabled for the target block and an information indicating that the PIP predictor applies for predicting the target block.

5. The method according to claim 1 or 2 wherein, the backward intra prediction process is Template based Intra Mode Derivation (TIMD).

6. The method according to claim 5 comprising signaling in video data or decoding from video data information indicating that TIMD is enabled for the target block and an information indicating that the PIP predictor applies for predicting the target block.

7. The method according to claim1 or 3 to 6 or the method according to claim 2 to 6 wherein, the neighborhood of the target block is divided into a plurality of reference arrays, and the method comprises signaling an information representing one reference array of the plurality of reference arrays to be used for applying the perspective intra prediction.

8. The method of claim 7 when depending on claim 1, 2, 3 or 5 wherein, at least one value of the information representing one reference array of the plurality of reference arrays indicates that the PIP predictor applies for predicting the target block.

9. The method of any previous claim comprising, responsive to a plurality of perspective points was generated, generating at least one additional PIP predictor, each additional PIP predictor being generated from a perspective point of the plurality, and identifying a final PIP predictor providing a best rate distortion performance among the PIP predictors, the target block being predicted from the final PIP predictor.

10. The method of claim 9 comprising signaling an information or decoding an information representing the final PIP predictor.

11. The method according to claim 9 when depending on claims 7 or 8 wherein, the information representing one reference array of the plurality of reference arrays allows deriving an information representing the final PIP predictor.

12. A device for encoding comprising electronic circuitry configured for:

applying (1202) a backward intra prediction process until obtaining at least one angular mode for a target block, at least one perspective point in a neighborhood of the target block being determined from the angular mode;
applying (1202) a perspective intra prediction (PIP) from samples in the neighborhood of the target block to generate a PIP predictor using at least one of the determined perspective point;
predicting (1205) the target block using the PIP predictor.

13. A device for decoding comprising electronic circuitry configured for:

applying (1307) a backward intra prediction process until obtaining at least one angular mode for a target block, at least one perspective point in a neighborhood of the target block being determined from the angular mode;
applying (1307) a perspective intra prediction (PIP) from samples in the neighborhood of the target block to generate a PIP predictor using at least one of the determined perspective point;
predicting (1307) the target block using the PIP predictor.

14. A signal representing video data comprising an information indicating that Decoder Side Intra mode Derivation (DIMD) or Template based Intra mode Derivation (TIMD) is enabled for a target block for determining at least one angular mode, at least one perspective point in a neighborhood of the target block being determined from the at least one angular mode, and an information indicating that a perspective intra prediction (PIP) from samples in the neighborhood of the target block using at least one of the determined at least one perspective point applies for determining a predictor to be used for predicting the target block.

15. Non-transitory information storage medium storing program code instructions for implementing the method according to any previous claim from claim 1 to 11.

Fig. 1

Fig. 2

Fig. 3

311

Encoded video
stream

410

Entropic decoding

412

Inverse quant.

413

Inverse transf.

414

Mode?

408

MV decoding

DPB

motion
compensation

416

Intra
prediction

415

419

Saving of ref.
picture

In-loop Filtering

417

418

Decoded pictures

Post-processing

421

Post-
processed
pictures

Fig. 4

Fig. 5A

Fig. 5B

15    535    536

| Display | Speakers | Peripherals |

| RF, COMP, USB, HDMI | Display Interface | Audio Interface | Peripheral Interface |

531    532    533    534

5005

500

13    12

Communication channel

Fig. 5C

Perspective point

Top reference array

Left
reference
array

prediction
directions

Fig. 6A

Fig. 6B

Fig. 7

DIMD HoG

Current CU

Fig. 8

```
                    ┌─────────────────┐
                    │    Obtaining    │ ⌇ 90
                    │  current block  │
                    └─────────────────┘
                             │
                             ▼
                ┌───────────────────────────┐
                │   Obtaining neighboring   │ ⌇ 91
                │  reconstructed reference  │
                │          samples          │
                └───────────────────────────┘
                             │
                             ▼
                    ┌─────────────────┐
                    │       HoG       │ ⌇ 92
                    │    derivation   │
                    └─────────────────┘
                             │
                             ▼
                    ┌─────────────────┐
                    │   DIMD modes    │ ⌇ 93
                    └─────────────────┘
                             │
                             ▼
                    ┌─────────────────┐
                    │     Weights     │ ⌇ 94
                    │    derivation   │
                    └─────────────────┘
                             │
                             ▼
                    ┌─────────────────┐
                    │ Determination of│ ⌇ 95
                    │    predictor    │
                    └─────────────────┘
```

Fig. 9

Fig. 10

Reference of the template

template

tH

Current CU

H

W

tW

Fig. 11

Fig. 7

Fig. 12

Fig. 13

Obtaining a target block — 1200

Determining usual DIMD RD performance — 1201

Determining DIMD based PIP RD performance — 1402

Determining RD performance other modes — 1203

DIMD + PIP offers best RD performance ? — 1204

yes → Apply PIP — 1405

no →

DIMD offers best RD performance ? — 1206

yes → Apply DIMD — 1407

no → Apply other mode — 1208

Fig. 14

Decode dimdFlag 〜 1300

Decode multiRefIdx 〜 1500

dimdFlag = 1? 〜 1301

no → Decode other syntax element 〜 1302

Other prediction 〜 1303

yes → multiRefIdx = 0 ? 〜 1501

yes → Decode perspectiveFlag 〜 1304

perspectiveFlag = 1? 〜 1305

no → Apply DIMD 〜 1306

yes → Apply PIP 〜 1307

Fig. 15

Fig. 16

Obtaining a target block — 1700

Determining TIMD RD performance — 1701

Determining TIMD based PIP RD performance — 1702

Determining RD performance other modes — 1703

TIMD based PIP offers best RD performance ? — 1704

yes

Apply PIP — 1705

no

TIMD offers best RD performance ? — 1706

yes

Apply TIMD — 1707

no

Apply other mode — 1708

Fig. 17

Decode TimdFlag — 1800

timdFlag = 1? — 1801

no

Decode other syntax element — 1802

Other prediction — 1803

yes

Decode perspectiveFlag — 1804

perspectiveFlag = 1? — 1805

no

apply TIMD — 1806

yes

Apply PIP — 1807

Fig. 18

Obtaining a target block /~1700

Determining TIMD RD performance /~1701

Determining TIMD based PIP RD performance /~1902

Determining RD performance other modes /~1703

TIMD based PIP offers best RD performance ? /~1704

yes

Apply PIP /~1905

no

TIMD offers best RD performance ? /~1706

yes

Apply TIMD /~1907

no

Apply other mode /~1708

Fig. 19

```
                    ┌─────────────────────┐
                    │  Decode dimdFlag    │～1800
                    └─────────────────────┘
                              │
                              ▼
                        ／1801
         no      ◇─────────────────────◇      yes
      ┌─────────  │   dimdFlag = 1?   │  ─────────┐
      │           ◇─────────────────────◇         │
      ▼                                            ▼
┌──────────────┐                         ┌──────────────────┐
│ Decode other │～1802                    │    Decode        │～1804
│syntax element│                         │ perspectiveFlag  │
└──────────────┘                         └──────────────────┘
      │                                            │
      ▼                                            ▼
┌──────────────┐～1803                      ／1805
│Other prediction│              no   ◇──────────────────────◇   yes
└──────────────┘              ┌──────│ perspectiveFlag = 1? │──────┐
                              │      ◇──────────────────────◇      │
                              ▼                                    ▼
                       ┌──────────────┐                  ┌──────────────┐～2000
                       │  Apply TIMD  │～1806             │   Decode     │
                       └──────────────┘                  │  multiRefIdx │
                                                         └──────────────┘
                                                                │
                                                                ▼
                                                         ┌──────────────┐～1807
                                                         │  Apply PIP   │
                                                         └──────────────┘
```

Fig. 20

**Europäisches Patentamt**
**European Patent Office**
**Office européen des brevets**

# EUROPEAN SEARCH REPORT

**Application Number**

EP 24 30 5494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/108480 A1 (LI LING [KR] ET AL) 6 April 2023 (2023-04-06) * paragraph [0019] - paragraph [0024] * * paragraph [0116] - paragraph [0121]; figures 9a-9d * * paragraph [0123] - paragraph [0125]; table 1 * * paragraph [0127] - paragraph [0128]; table 2 * | 1-15 | INV. H04N19/105 H04N19/11 H04N19/176 H04N19/593 |
| X | WO 2023/129744 A1 (BEIJING DAJIA INTERNET INFORMATION TECH CO LTD [CN] ET AL.) 6 July 2023 (2023-07-06) * paragraph [0104] - paragraph [0114]; figures 5a-5d * * paragraph [0141] - paragraph [0163]; figures 11-12 * * paragraph [0125] - paragraph [0126] * * paragraph [0133] - paragraph [0137] * | 1-15 | |
| X | LI (ALIBABA-INC) X ET AL: "EE2-related: A combination of CIIP and DIMD/TIMD", 23. JVET MEETING; 20210707 - 20210716; TELECONFERENCE; (THE JOINT VIDEO EXPLORATION TEAM OF ISO/IEC JTC1/SC29/WG11 AND ITU-T SG.16 ), , no. JVET-W0068 ; m57180 30 June 2021 (2021-06-30), XP030295929, Retrieved from the Internet: URL:https://jvet-experts.org/doc_end_user/documents/23_Teleconference/wg11/JVET-W0068-v1.zip JVET-W0068-v1.docx [retrieved on 2021-06-30] * page 1, paragraph 1 - page 2, paragraph 2.2 * | 1-15 | TECHNICAL FIELDS SEARCHED (IPC) H04N |

The present search report has been drawn up for all claims

| Place of search | Date of completion of the search | Examiner |
|---|---|---|
| Munich | 6 September 2024 | Moschetti, Fulvio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5494

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | Publication date | Patent family member(s) | | Publication date |
|---|---|---|---|---|
| US 2023108480 A1 | 06-04-2023 | CN | 116530080 A | 01-08-2023 |
| | | EP | 4229867 A1 | 23-08-2023 |
| | | JP | 2024509231 A | 29-02-2024 |
| | | KR | 20230085184 A | 13-06-2023 |
| | | US | 2023108480 A1 | 06-04-2023 |
| | | US | 2024275977 A1 | 15-08-2024 |
| | | WO | 2023059972 A1 | 13-04-2023 |
| WO 2023129744 A1 | 06-07-2023 | CN | 118402232 A | 26-07-2024 |
| | | WO | 2023129744 A1 | 06-07-2023 |

For more details about this annex : see Official Journal of the European Patent Office, No. 12/82

**REFERENCES CITED IN THE DESCRIPTION**

**Patent documents cited in the description**

- EP 23306661

**Non-patent literature cited in the description**

- JVET-AF2025: Algorithm description of Enhanced Compression Model 11 (ECM 11). *Joint Video Experts Team (JVET) of ITU-T SG 16 WP 3 and ISO/IEC JTC 1/SC 29, 32nd Meeting*, 13 November 2023